(19) Europäisches Patentamt
European Patent Office
Office européen des brevets

(11) **EP 4 254 274 B1**

(12) **EUROPEAN PATENT SPECIFICATION**

(45) Date of publication and mention
of the grant of the patent:
**20.05.2026 Bulletin 2026/21**

(21) Application number: **23164664.7**

(22) Date of filing: **28.03.2023**

(51) International Patent Classification (IPC):
**G06N 5/01** *(2023.01)*    **G06N 7/01** *(2023.01)*

(52) Cooperative Patent Classification (CPC):
**G06N 5/01; G06N 7/01**

(54) **INFORMATION PROCESSING APPARATUS, INFORMATION PROCESSING METHOD, AND COMPUTER PROGRAM**

INFORMATIONSVERARBEITUNGSVORRICHTUNG, INFORMATIONSVERARBEITUNGSVERFAHREN UND COMPUTERPROGRAMM

APPAREIL DE TRAITEMENT D'INFORMATIONS, PROCÉDÉ DE TRAITEMENT D'INFORMATIONS ET PROGRAMME INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.03.2022 JP 2022058570**

(43) Date of publication of application:
**04.10.2023 Bulletin 2023/40**

(73) Proprietor: **FUJITSU LIMITED**
**Kawasaki-shi, Kanagawa 211-8588 (JP)**

(72) Inventors:
• **CHEN, Sigeng**
**Toronto, Ontario, M5S 1A1 (CA)**
• **ROSENTHAL, Jeffrey Seth**
**Toronto, Ontario, M5S 1A1 (CA)**
• **SHEIKHOLESLAMI, Ali**
**Toronto, Ontario, M5S 1A1 (CA)**
• **TAMURA, Hirotaka**
**Yokohama-shi, Kanagawa, 223-0066 (JP)**
• **MATSUBARA, Satoshi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
**JP-A- 2020 038 435    US-A1- 2020 401 738**

• **HALDANE ALLAN ET AL: "Mi3-GPU: MCMC-based inverse Ising inference on GPUs for protein covariation analysis", COMPUTER PHYSICS COMMUNICATION, ELSEVIER SCIENCE PUBLISHERS B.V., AMSTERDAM, NL, vol. 260, 17 April 2020 (2020-04-17), XP086438537, ISSN: 0010-4655, [retrieved on 20200417], DOI: 10.1016/J.CPC.2020.107312**

**Description**

FIELD

The embodiments discussed herein relate to an information processing apparatus, an information processing method, and a computer program.

BACKGROUND

Information processing apparatuses may be used to solve combinatorial optimization problems. A combinatorial optimization problem is transformed into an energy function of an Ising model that expresses the behavior of magnetic spins. The energy function may be called an evaluation function or an objective function. For example, an information processing apparatus searches combinations of the values of state variables included in the energy function to find a combination that minimizes the value of the energy function. In this case, the combination of the values of the state variables that minimizes the value of the energy function corresponds to the ground state or an optimal solution, which is represented by a set of the state variables. Techniques for obtaining an approximate solution to a combinatorial optimization problem in practical time include simulated annealing (SA) and replica exchange based on the Markov-chain Monte Carlo (MCMC) method.

For example, there has been proposed an information processing system that has one or a plurality of semiconductor chips that perform the ground-state search of an Ising model. This information processing system finds a solution to a problem by searching for the ground state of the Ising model using the semiconductor chip(s).

Further, there has been proposed an optimization system that includes an optimization apparatus with a plurality of neuron groups. In this proposal, the optimization apparatus calculates, out of energy change caused by a change in the value of a first neuron belonging to a selected neuron group, a first change portion caused by influence of the other neurons belonging to the neuron group. On the other hand, a computing apparatus different from the optimization apparatus calculates a second change portion caused by influence of second neurons that do not belong to the neuron group. The optimization apparatus determines whether to update the first neuron value, with stochastic search on the basis of the sum of the first and second change portions, and updates or maintains the first neuron value depending on the update determination result. The above update process is repeated.

Still further, there has been proposed a sampling device that includes a plurality of update circuits, each of which calculates a change in the value of an energy function on the basis of a local field corresponding to a state variable that is selected as a change candidate in a predetermined order, and changes the value of the state variable selected as the change candidate depending on the calculated change. Each time one state variable is selected as the change candidate, this proposed sampling device reads a coupling coefficient for each set of the one state variable selected as the change candidate and another state variable from a memory storing coupling coefficients for all sets of two state variables, and stores the read coupling coefficients in the storage unit of each of the plurality of update circuits. When changing the value of the one state variable selected as the change candidate, the update circuits update the local fields of the other state variables using the coupling coefficients.

See, for example, Japanese Laid-open Patent Publications No. 2016-51350, 2019-139323, and 2020-204929.

Still further, there has been proposed a method according to which a storage unit stores a weight coefficient group about a plurality of bits as a part of all bits, of all weight coefficients stored in a storage device, where an arithmetic circuit performs search for a ground state of an Ising model by repeating update determination processing including processing to calculate energy change of the Ising model due to change in a value of each of the plurality of bits on the basis of the weight coefficient group and information about a bit with the value being updated, of the plurality of bits, and processing to probabilistically allow update of one of the plurality of bits on the basis of the energy change, where a control unit, when the update determination processing is repeated a predetermined number of times, reads a weight coefficient group about bits other than the plurality of bits from the storage device, partially updates the weight coefficient group stored in the storage unit so as to include the read weight coefficient group, and causes the arithmetic circuit to perform the update determination processing using the updated weight coefficient group. See, for example, Japanese Laid-open Patent Publication No. 2020-38435.

An information processing apparatus uses coupling coefficients for respective pairs of state variables for finding a solution to a combinatorial optimization problem, as described above. By storing the coupling coefficients in a storage unit serving as a cache, which provides relatively fast access from a computing unit that updates the values of state variables, it becomes possible to accelerate the problem solving.

However, if the storage unit has a relatively small capacity, it may fail to store all the coupling coefficients. In this case, all the coupling coefficients may be stored in a storage device that provides slower access from the computing unit than the storage unit but has a relatively large capacity. At this point, for example, as in the above proposal, the following method is considered: each time one state variable is selected as a next change candidate, the computing unit reads coupling coefficients associated with the state variable from the storage device and stores the read coupling coefficients in the storage unit for use in updating the value of the state variable. This method, however, increases the frequency of access to the storage device holding all the coupling coefficients and thus limits the processing speed for the problem solving.

SUMMARY

According to one aspect, the present disclosure intends to accelerate solving a large-scale problem. The invention is set out in the appended set of claims.

BRIEF DESCRIPTION OF DRAWINGS

FIG. 1 is a view for describing an information processing apparatus according to a first embodiment;
FIG. 2 illustrates an example of hardware of a data processing apparatus according to a second embodiment;
FIG. 3 illustrates an example of hardware of an accelerator card;
FIG. 4 illustrates an example of functions of a computing device;
FIG. 5 illustrates an example of a coupling coefficient matrix;
FIG. 6 illustrates an example of reading coupling coefficients;
FIG. 7 is a flowchart illustrating an example of processing of the computing device;
FIG. 8 illustrates an example of a parallel trial execution unit;
FIG. 9 illustrates an example of a selection unit that performs the partial neighbor search (PNS) rejection-free (RF) method;
FIG. 10 illustrates an example of reading coupling coefficients according to a third embodiment;
FIG. 11 illustrates an example of a search unit;
FIG. 12 illustrates an example of the relationship between local variables and global variables;
FIG. 13 illustrates an example of functions of a computing device;
FIG. 14 illustrates an example of generating a coefficient data stream;
FIG. 15 illustrates a first example of a coefficient data stream;
FIG. 16 illustrates a second example of the coefficient data stream;
FIG. 17 illustrates an example of calculating energy;
FIG. 18 illustrates a first example of local variable update;
FIG. 19 illustrates a second example of the local variable update;
FIG. 20 illustrates a third example of the local variable update;
FIG. 21 is a flowchart illustrating an example of updating a plurality of rows;
FIG. 22 illustrates an example of a timing chart; and
FIG. 23 illustrates a modification example of the computing device.

DESCRIPTION OF EMBODIMENTS

Hereinafter, embodiments will be described with reference to the accompanying drawings.

(First Embodiment)

A first embodiment will be described.

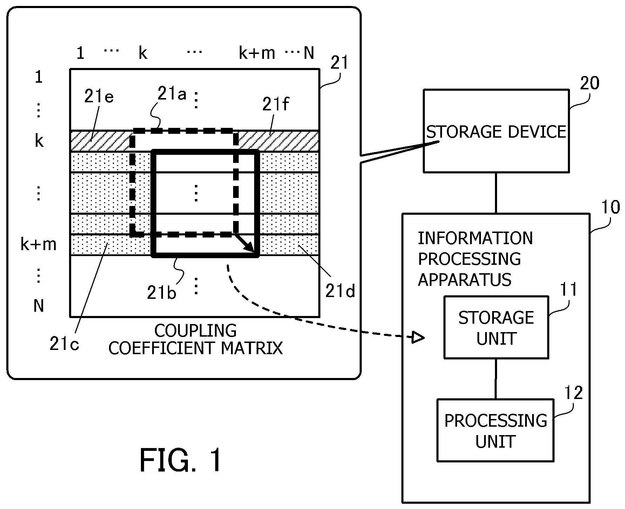

FIG. 1 is a view for describing an information processing apparatus according to the first embodiment.
The information processing apparatus 10 finds a solution to a combinatorial optimization problem using the Markov-chain Monte Carlo (MCMC) method and outputs the found solution. For example, the information processing apparatus 10 uses the simulated annealing (SA) or replica exchange based on the MCMC method to find the solution. The information processing apparatus 10 includes a storage unit 11 and a processing unit 12.
The storage unit 11 is a static random access memory (SRAM), for example. The processing unit 12 may be an electronic circuit such as a central processing unit (CPU), a digital signal processor (DSP), an application specific integrated circuit (ASIC), a field programmable gate array (FPGA), or a graphics processing unit (GPU). The processing unit 12 may be a processor that executes programs. The "processor" may include a set of multiple processors (multiprocessor).
The information processing apparatus 10 is connected to a storage device 20. The storage device 20 has a larger storage capacity than the storage unit 11. The storage device 20 is a dynamic random access memory (DRAM), for example. The processing unit 12 is able to access the storage unit 11 faster than the storage device 20. In this connection, the storage unit 11 may be provided in the processing unit 12. In addition, the storage device 20 may be provided in the information processing apparatus 10.

Here, a combinatorial optimization problem is formulated using an Ising-type energy function and is, for example, transformable to a problem that minimizes the value of the energy function. The energy function may be called an objective function or an evaluation function. The energy function includes a plurality of state variables. The state variables are binary variables, which each have a value of 0 or **1.** The state variables may be called bits. The values of the plurality of state variables represent a state of the Ising model. A solution to the combinatorial optimization problem is represented by the values of the plurality of state variables. A solution that minimizes the energy function represents the ground state of the Ising model and corresponds to an optimal solution of the combinatorial optimization problem. The value of the energy function is called energy.

The Ising-type energy function is defined by Equation (1).

$$E(\boldsymbol{x}) = -\sum_{\langle i,j \rangle} W_{ij} x_i x_j - \sum_i b_i x_i \qquad (1)$$

A state vector x represents a state of the Ising model with a plurality of state variable as elements. Equation (1) is an energy function formulated in a quadratic unconstrained binary optimization (QUBO) form. In this connection, for solving a problem that maximizes the energy, the signs of the energy function may be changed; plus changed to minus or minus changed to plus.

The first term of the right side of Equation (1) is the sum of the products of the values of two state variables and a coupling coefficient over all possible pairs of state variables selectable from all state variables without omission or repetition. The subscripts i and j are the indices of the state variables. Here, $x_i$ denotes an i-th state variable, and $x_j$ denotes a j-th state variable. In addition, $W_{ij}$ denotes a weight between the i-th state variable and the j-th state variable, or denotes a coupling coefficient indicating the intensity of coupling strength. Note that $W_{ij} = W_{ji}$ and $W_{ii} = 0$.

The second term of the right side of Equation (1) is the sum of the products of the bias and value of each of all state variables. Here, $b_i$ denotes a bias for the i-th state variable. In Equation (1), when the value of the state variable $x_i$ is changed to 1 - $x_i$, an increase in $x_i$ is given by $\Delta x_i = (1 - x_i) - x_i = 1 - 2x_i$. A change in the energy (hereinafter, referred to as "energy change") $\Delta E_i$ due to the change in $x_i$ is given by Equation (2).

$$\Delta E_i = E(\boldsymbol{x})\Big|_{x_i \to 1-x_i} - E(\boldsymbol{x})$$
$$= -\Delta x_i \left( \sum_j W_{ij} x_j + b_i \right)$$
$$= -\Delta x_i h_i$$
$$= \begin{cases} -h_i & \text{for } x_i = 0 \to 1 \\ +h_i & \text{for } x_i = 1 \to 0 \end{cases} \qquad (2)$$

Here, $h_i$ is called a local field and is given by Equation (3).

$$h_i = \sum_j W_{ij} x_j + b_i \qquad (3)$$

A change $\Delta h_i^{(j)}$ in the local field $h_i$ due to a change in the state variable $x_j$ is given by Equation (4).

$$\Delta h_i^{(j)} = \begin{cases} +W_{ij} & \text{for } x_j = 0 \rightarrow 1 \\ -W_{ij} & \text{for } x_j = 1 \rightarrow 0 \end{cases} \tag{4}$$

In this connection, $h_i$ corresponding to the state variable $x_i$ after the change in the value of the state variable $x_j$ is obtained by adding the change $\Delta h_i^{(j)}$ based on the change in the $x_j$ value to $h_i$. The values of the plurality of state variables and a plurality of local fields corresponding to the plurality of state variables are held in a variable storage unit provided in the information processing apparatus 10. The variable storage unit is not illustrated in FIG. 1. The variable storage unit may be a register provided in the processing unit 12.

In searching for the ground state, the Metropolis and Gibbs algorithms are used to determine whether to accept a state transition that causes the energy change $\Delta E_i$, i.e., whether to accept the change in the value of the state variable $x_i$. More specifically, in neighborhood search for a transition from a certain state to another state with lower energy, not only a transition that decreases the energy but also a transition that increases the energy is stochastically accepted. For example, a probability $A_i$ of accepting a change in the value of a state variable that causes an energy change $\Delta E_i$ is given by Equation (5).

$$A_i = \begin{cases} \min\left[1, \exp(-\beta \cdot \Delta E_i)\right] & \text{Metropolis} \\ 1/\left[1 + \exp\left(\beta \cdot \Delta E_i\right)\right] & \text{Gibbs} \end{cases} \tag{5}$$

In Equation (5), $\beta$ is the reciprocal ($\beta = 1/T$) of a temperature value T (T > 0) and is called an inverse temperature. The min operator takes the minimum value among arguments. The upper part at the right side of Equation (5) corresponds to the Metropolis algorithm, whereas the lower part at the right side thereof corresponds to the Gibbs algorithm. The processing unit 12 compares a uniform random number u (0 < u < 1) with $A_i$, and if u < $A_i$, accepts the change in the value of the state variable $x_i$, and changes the value of the state variable $x_i$. If u < $A_i$ is not obtained, the processing unit 12 does not accept the change in the value of the state variable $x_i$ or change the value of the state variable $x_i$. Equation (5) indicates that $A_i$ decreases with an increase in $\Delta E_i$. In addition, as $\beta$ decreases, **i.e.,** as T increases, a state transition that causes high $\Delta E_i$ is more likely to be accepted. The processing unit 12 repeats a trial on whether to change the value of any state variable on the basis of Equation (5) in this manner, to thereby make state transitions of the Ising model and find a solution.

For example, the processing unit 12 may search for a solution by selecting the state variables one by one as a candidate for value change, in order or at random, making determination based on Equation (5), and when determining to accept the change in the value of the state variable selected as the candidate, updating the value of the state variable. Alternatively, the processing unit 12 may search for a solution by making determination based on Equation (5) in parallel across a plurality of state variables and updating the value of any of the state variables on the basis of the results of the parallel determination.

Here, all coupling coefficients included in the energy function, that is, a plurality of coupling coefficients corresponding to all pairs of the plurality of state variables are stored in the storage device 20. The storage unit 11 has a relatively small capacity and is thus not able to store all the coupling coefficients. Therefore, the processing unit 12 reads some of the coupling coefficients from the storage device 20 and stores the read coupling coefficients in the storage unit 11 for use in solving a problem represented by the energy function.

More specifically, the processing unit 12 reads, from the storage device 20, a plurality of first coupling coefficients corresponding to a plurality of first pairs of first state variables belonging to a trial target set among the plurality of state variables and stores them in the storage unit 11. Here, the first state variables included in the trial target set are targets for trials of value update. Using the plurality of first coupling coefficients stored in the storage unit 11, the processing unit 12 conducts a trial on whether to update the value of any first state variable belonging to the trial target set, a plurality of times. Here, a process of reading the plurality of first coupling coefficients for the trial target set from the storage device 20, storing them in the storage unit 11, and conducting a trial on whether to update the value of any state variable belonging to the trial target set using the first coupling coefficients a plurality of times is taken as a single unit of processing. The processing unit 12 repeats this process while changing the trial target set, so as to target all the plurality of state variables in the trials.

For example, all the coupling coefficients stored in the storage device 20 are collectively represented by a coupling coefficient matrix 21. As an example, the number of state variables belonging to the trial target set is taken as m, which is an integer of two or greater. The total number of state variables is N, which is an integer greater than m. The indices of the state variables are in the range of 1 to N. In this case, the coupling coefficient matrix 21 is an N-by-N matrix.

For example, assume now that the trial target set at a certain time point is a set of state variables $x_k$ to $x_{k+m-1}$. In this case, a plurality of first coupling coefficients to be stored in the storage unit 11 corresponds to a block 21a of the coupling coefficient matrix 21. The row indices and column indices of the first coupling coefficients belonging to the block 21a are both in the range of k to k+m-1. The processing unit 12 conducts, a plurality of times, a trial on whether to update the value of any of the state variables $x_k$ to $x_{k+m-1}$ using the plurality of first coupling coefficients belonging to the block 21a.

After that, the processing unit 12 changes the trial target set. As an example, the processing unit 12 changes the trial target set to a set of state variables $x_{k+1}$ to $x_{k+m}$. After this change, a plurality of first coupling coefficients to be stored in the storage unit 11 correspond to a block 21b of the coupling coefficient matrix 21. The row indices and column indices of the first coupling coefficients belonging to the block 21b are both in the range of k+1 to k+m. At this time, out of the coupling coefficients of the block 21b, the processing unit 12 does not need to read coupling coefficients that are included in the block 21a already stored in the storage unit 11, from the storage device 20. In addition, $W_{ij} = W_{ji}$ is satisfied as mentioned earlier. Therefore, the processing unit 12 obtains the plurality of first coupling coefficients belonging to the block 21b by reading the coupling coefficients in row index k+m and column indices k+1 to k+m from the storage device 20. Then, the processing unit 12 conducts, a plurality of times, a trial on whether to update the value of any of the state variables $x_{k+l}$ to $x_{k+m}$ using the plurality of first coupling coefficients belonging to the block 21b.

In this connection, although it is assumed in the above example that the indices of the state variables in the trial target set are consecutive, the indices may be nonconsecutive. In addition, although the above example describes one state variable being added to the trial target set in a single change of the trial target set, a plurality of state variables may be added to the trial target set.

By the way, the update of the value of a state variable involves updating the local fields corresponding to the other state variables as described above. According to the claimed invention, the processing unit 12 employs the following second method to update the value of a state variable and the local fields corresponding to the other state variables. The following first method is not covered by the subject-matter of the claims.

(First Method)

With the first method, the processing unit 12 reads, from the storage device 20, a plurality of second coupling coefficients corresponding to a plurality of pairs each including one of the plurality of first state variables belonging to the trial target set and one of a plurality of second state variables that do not belong to the trial target set, together with the plurality of first coupling coefficients. The processing unit 12 stores the plurality of first coupling coefficients and the plurality of second coupling coefficients in the storage unit 11. For example, in the case where the trial target set includes state variables $x_{k+1}$ to $x_{k+m}$, the plurality of second coupling coefficients correspond to blocks 21c and 21d of the coupling coefficient matrix 21. The row indices of the second coupling coefficients belonging to the block 21c are in the range of k+1 to k+m, and the column indices thereof are in the range of 1 to k. The row indices of the second coupling coefficients belonging to the block 21d are in the range of k+1 to k+m, and the column indices thereof are in the range of k+m+1 to N. In this example, the indices of the state variables belonging to the trial target set are associated with the row indices of the coupling coefficient matrix 21, but may be associated with the column indices of the coupling coefficient matrix 21.

Then, the processing unit 12 conducts a trial on whether to update the value of any state variable belonging to the trial target set in the following manner. More specifically, the processing unit 12 calculates an energy change due to a change in a first state variable belonging to the trial target set on the basis of the local field corresponding to the first state variable, and updates the value of the first state variable on the basis of Equation (5) depending on the calculated change. After updating the value of the first state variable, the processing unit 12 updates the local fields respectively corresponding to the plurality of first state variables belonging to the trial target set, on the basis of the first coupling coefficients associated with the updated first state variable. In addition, the processing unit 12 updates the local fields respectively corresponding to the plurality of second state variables that do not belong to the trial target set, on the basis of the second coupling coefficients associated with the updated first state variable.

For example, the processing unit 12 updates the value of a first state variable $x_j$ with index j among the state variables $x_{k+1}$ to $x_{k+m}$. Then, the processing unit 12 updates the local fields respectively corresponding to the state variables $x_{k+1}$ to $x_{k+m}$ on the basis of the first coupling coefficients included in the row with row index j of the block 21b. In addition, the processing unit 12 updates the local fields respectively corresponding to the state variables $x_1$ to $x_k$ and $x_{k+m+1}$ to $x_N$ on the basis of the second coupling coefficients included in the row with row index j of the blocks 21c and 21d.

As described above, for example, the processing unit 12 may be designed to read the blocks 21c and 21d of the coupling coefficient matrix 21 together with the block 21b from the storage device 20 and stores them in the storage unit 11, and when updating the value of a state variable belonging to the trial target set, update the local fields corresponding to the other state variables accordingly. In this connection, the storage unit 11 may be referred to as a first storage unit. In addition, in the first method, the variable storage unit that stores the values of the plurality of state variables and the plurality of local fields corresponding to the plurality of state variables may be referred to as a second storage unit. The description of the first method is now complete.

(Second Method)

With the second method, the information processing apparatus 10 includes a local variable storage unit and a global variable storage unit as the above-described variable storage unit. The local variable storage unit stores the values of the plurality of first state variables belonging to the trial target set among the plurality of state variables $x_1$ to $x_N$ and a plurality of first local fields corresponding to the plurality of first state variables. The global variable storage unit stores the values of the plurality of state variables $x_1$ to $x_N$ and a plurality of second local fields corresponding to the plurality of state variables.

The processing unit 12 changes the trial target set from the previous one to the current one in following manner. The processing unit 12 reads a plurality of third coupling coefficients corresponding to a plurality of pairs each including a first differential state variable that is included in the previous trial target set but is not included in the current trial target set and one of the other state variables, together with the plurality of first coupling coefficients from the storage device 20 and stores them in the storage unit 11. For example, assume now that the previous trial target set includes state variables $x_k$ to $x_{k+m-1}$ and the current trial target set includes $x_{k+1}$ to $x_{x+m}$. In this case, the state variable $x_k$ is the first differential state variable. In this example, the plurality of third coupling coefficients the processing unit 12 reads from the storage device 20 correspond to blocks 21e and 21f of the coupling coefficient matrix 21. The row index of the third coupling coefficients belonging to the block 21e is k, and the column indices thereof are in the range of 1 to k-1. The row index of the third coupling coefficients belonging to the block 21f is k, and the column indices thereof are in the range of k+m to N. Note that the processing unit 12 is able to use again, as the third coupling coefficients, the coupling coefficients in the row index k and column indices k to k+m-1 in the block 21a held for the previous trial target set in the storage unit 11.

The processing unit 12 updates the second value of the first differential state variable stored in the global variable storage unit with the first value of the first differential state variable stored in the local variable storage unit. The processing unit 12 then updates the plurality of second local fields stored in the global variable storage unit on the basis of the difference in the second value between before and after the update and the plurality of third coupling coefficients.

For example, in the case where the first differential state variable is $x_k$, the processing unit 12 updates the second value of the state variable $x_k$ stored in the global variable storage unit with the first value of the state variable $x_k$ stored in the local variable storage unit. The processing unit 12 then updates the second local fields of all state variables stored in the global variable storage unit on the basis of the difference between the values of the state variable $x_k$ before and after the update in the global variable storage unit and the third coupling coefficients in the row with row index **k.** By doing so, the change made to the value of the state variable $x_k$ held in the local variable storage unit is reflected on all the second local fields stored in the global variable storage unit.

After that, the processing unit 12 obtains the third value of a second differential state variable that is not included in the previous trial target set but is included in the current trial target set, among the plurality of state variables from the global variable storage unit and stores it in the local variable storage unit. For example, in the case where the previous trial target set includes the state variables $x_k$ to $x_{k+m-1}$ and the current trial target set includes the state variables $x_{k+1}$ to $x_{k+m}$, the state variable $x_{k+m}$ is the second differential state variable.

Then, the processing unit 12 calculates a first local field corresponding to the second differential state variable newly added to the local variable storage unit and stores it in the local variable storage unit. More specifically, the processing unit 12 obtains the differences between fourth and fifth values of each of the plurality of first state variables respectively stored in the local variable storage unit and the global variable storage unit. The processing unit 12 calculates the first local field corresponding to the second differential state variable on the basis of the obtained differences in the value of each first state variable, the second local field of the second differential state variable stored in the global variable storage unit, and the plurality of first coupling coefficients stored in the storage unit 11. Thereby, the processing unit 12 is able to match the local field of the second differential state variable newly added to the local variable storage unit with the values of the state variables held in the local variable storage unit.

After the processing unit 12 changes the trial target set among the plurality of state variables in the above-described manner, the processing unit 12 conducts a trial on whether to update the value of any first state variable belonging to the changed trial target set in the following manner. More specifically, the processing unit 12 calculates an energy change due to a change in a first state variable belonging to the trial target set, on the basis of the first local field corresponding to the first state variable, and updates the value of the first state variable on the basis of Equation (5) depending on the calculated change. When updating the value of the first state variable, the processing unit 12 updates the plurality of first local fields corresponding to the plurality of first state variables, stored in the local variable storage unit, on the basis of the first coupling coefficients associated with the updated first state variable, stored in the storage unit 11.

As described above, the processing unit 12 may read the blocks 21e and 21f of the coupling coefficient matrix 21 together with the block 21b from the storage device 20 and stores them in the storage unit 11. Then, on the basis of the blocks 21e and 21f, the processing unit 12 may update the second local fields corresponding to the state variables that do not belong to the current trial target set in the global variable storage unit. The processing unit 12 may perform the update of the second local fields in the global variable storage unit and the trial based on the information stored in the local variable storage unit in parallel.

In this connection, when reading the third coupling coefficients from the storage device 20, the processing unit 12 may omit reading coupling coefficients corresponding to pairs each including the first differential state variable and one of the other state variables belonging to the previous trial target set, as described above. This leads to a reduction in the memory bandwidth for reading from the storage device 20, for example, as compared with the case of reading the entire row with row index k associated with the first differential state variable from the storage device 20. Alternatively, the processing unit 12 may read the entire row with row index k as the third coupling coefficients from the storage device 20. In this case, the processing unit 12 may simply read the row with row index k of the coupling coefficient matrix 21 and store it in the storage unit 11. Although this increases the memory bandwidth for reading from the storage device 20, the processing unit 12 does not need to process the data of the row when reading the data, which thus accelerates reading the third coupling coefficients.

In addition, the global variable storage unit may be provided outside the information processing apparatus 10. For example, the global variable storage unit may be provided in the storage device 20. In this case, the information processing apparatus 10 does not need to have a storage space for use as the global variable storage unit.

In addition, the term "third coupling coefficients" in the second method is used just for convenience to distinguish from the second coupling coefficients of the first method. The third coupling coefficients in the second method may be denoted by "second coupling coefficients" if such distinction is not needed. The storage unit 11 may be referred to as a first storage unit. In addition, the local variable storage unit may be referred to as a third storage unit. The global variable storage unit may be referred to as a fourth storage unit. The description of the second method is now complete.

As described above, the information processing apparatus 10 performs a process of reading a plurality of first coupling coefficients corresponding to a plurality of pairs of first state variables belonging to a trial target set among a plurality of state variables from the storage device 20, which stores all coupling coefficients, storing the plurality of first coupling coefficients in the storage unit 11, and conducting, a plurality of times, a trial on whether to update the value of any first state variable belonging to the trial target set using the plurality of first coupling coefficients stored in the storage unit 11. By repeating change of the trial target set and this process, all the plurality of state variables are targeted in the trials.

The information processing apparatus 10 uses the first coupling coefficients stored in the storage unit 11 in the plurality of trials as described above, which reduces the frequency of access to the storage device 20 and thus prevents a decrease in processing speed due to the access to the storage device **20.** As a result, it is achieved to accelerate solving a large-scale problem in which the total size of coupling coefficients is relatively large.

In addition, as exemplified in the first method, the information processing apparatus 10 may read the second coupling coefficients corresponding to pairs each including one of the state variables belonging to the trial target set and one of the other state variables that do not belong to the trial target set, together with the first coupling coefficients from the storage device 20 and store them in the storage unit 11. In this case, the information processing apparatus 10 is able to update the local fields of the other state variables that do not belong to the trial target set on the basis of the second coupling coefficients properly.

In addition, as exemplified in the second method, the information processing apparatus 10 may hold the state variables and local fields using the local variable storage unit and global variable storage unit. The information processing apparatus 10 may read the third coupling coefficients corresponding to pairs each including the first differential state variable and one of the other state variables, together with the first coupling coefficients from the storage device 20 and stores them in the storage unit 11. In this case, the information processing apparatus 10 is able to correctly reflect a change in the value of the first differential state variable held in the local variable storage unit, on the local fields stored in the global variable storage unit on the basis of the third coupling coefficients. Therefore, when a state variable stored in the global variable storage unit is added to the local variable storage unit as a trial target thereafter, the information processing apparatus 10 is able to correctly calculate the local field of the state variable on the basis of the information held in the global variable storage unit and the information held in the local variable storage unit. That is, the information processing apparatus 10 is able to correctly match the local field of the state variable newly added to the local variable storage unit with the values of the other state variables held in the local variable storage unit.

In addition, the second method is able to reduce the number of updates for the local fields of the state variables that do not belong to the trial target set and thus reduces the overhead for the updates, as compared with the first method. In addition, the second method is able to reduce the size of coupling coefficients to be read in the storage unit 11, as compared with the first method.

The processing unit 12 repeats the above process while changing the trial target set among the plurality of state variables, so as to target all the plurality of state variables in the trials. For example, in the case of using the SA method, after the processing unit 12 repeats one-round search targeting all the plurality of state variables in the trials, a plurality of times, the processing unit 12 continues the search with an increased inverse temperature $\beta$ used in Equation (5), i.e., a decreased temperature value T. Then, when the inverse temperature $\beta$ or the temperature value T has reached a final value, the processing unit 12 outputs, as a solution, the state corresponding to the minimum energy obtained so far.

In the case of using the replica exchange method, for example, a plurality of processing units that conduct search with different temperature values in the same manner as done by the processing unit 12 are provided in the information processing apparatus 10. In this case, after a processing unit 12 repeats one-round search targeting all the plurality of state variables in trials, a plurality of times, it exchanges temperature values or the values of a plurality of state variables with another processing unit with a predetermined exchange probability, and then continues the search. Then, after a predetermined time has passed, the information processing apparatus 10 outputs a state that provides the minimum energy among the states obtained by the plurality of processing units as a solution.

(Second Embodiment)

A second embodiment will now be described.

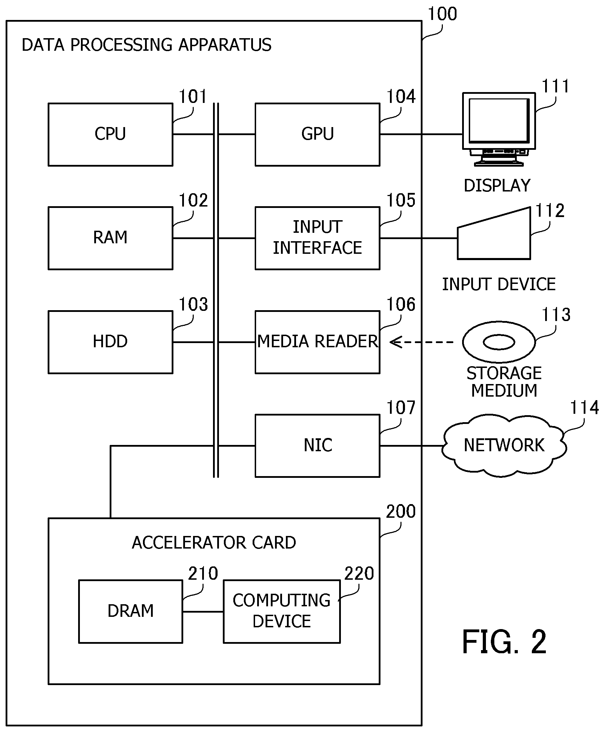

FIG. 2 illustrates an example of hardware of a data processing apparatus according to the second embodiment.

The data processing apparatus 100 finds a solution to a combinatorial optimization problem with the MCMC method and outputs the found solution. The combinatorial optimization problem is represented by the Ising-type energy function of Equation (1). The data processing apparatus 100 includes a CPU 101, a RAM 102, an HDD 103, a graphics processing unit (GPU) 104, an input interface 105, a media reader 106, a network interface card (NIC) 107, and an accelerator card 200.

The CPU 101 is a processor that executes program instructions. The CPU 101 loads at least part of a program and data from the HDD 103 into the RAM 102 and executes the program. In this connection, the CPU 101 may include a plurality of processor cores. In addition, the data processing apparatus 100 may include a plurality of processors. In addition, a set of multiple processors may be called a "multiprocessor" or a "processor" simply.

The RAM 102 is a volatile semiconductor memory that temporarily stores programs to be executed by the CPU 101 and data to be used by the CPU 101 in processing. The data processing apparatus 100 may include another type of memory than RAM or may include a plurality of memories.

The HDD 103 is a non-volatile storage device that stores software programs, such as an operating system (OS), middleware, and application software, and data. In this connection, the data processing apparatus 100 may include another type of storage device such as a flash memory or a solid state drive (SSD), or may include a plurality of non-volatile storage devices.

The GPU 104 outputs images to a display 111 connected to the data processing apparatus 100 in accordance with commands from the CPU 101. A cathode ray tube (CRT) display, a liquid crystal display (LCD), a plasma display panel, an organic electro-luminescence (OEL) display, or another desired display may be used as the display 111.

The input interface 105 receives input signals from an input device 112 connected to the data processing apparatus 100 and outputs the received input signals to the CPU 101. A pointing device such as a mouse, a touch panel, a touch pad, or a track ball, a keyboard, a remote controller, a button switch, or the like may be used as the input device 112. In addition, multiple types of input devices may be connected to the data processing apparatus 100.

The media reader 106 is a reading device that reads programs and data from a storage medium 113. A magnetic disk, optical disc, magneto-optical (MO) disk, semiconductor memory, or the like may be used as the storage medium 113. Magnetic disks include flexible disks (FDs) and HDDs. Optical discs include compact discs (CDs) and digital versatile discs (DVDs).

For example, the media reader 106 copies a program and data read from the storage medium 113 to another storage medium such as the RAM 102 or the HDD 103. The program read is executed by the CPU 101, for example. The storage medium 113 may be a portable storage medium and be used for distributing programs and data. The storage medium 113 and HDD 103 may be referred to as computer-readable storage media.

The NIC 107 is an interface that is connected to a network 114 and communicates with other computers over the network 114. For example, the NIC 107 is connected to a communication device such as a switch or router by a cable. The NIC 107 may be a wireless communication interface.

The accelerator card 200 is a hardware accelerator that searches for a solution to a problem represented by the Ising-type energy function of Equation (1), i.e., an Ising problem with the MCMC method. The accelerator card 200 performs the MCMC method with a fixed temperature or the replica exchange method of exchanging states of the Ising model between a plurality of temperatures. By doing so, the accelerator card 200 may be used as a sampler of sampling states following a Boltzmann distribution with the temperature. To solve the Ising problem, the accelerator card 200 performs the replica exchange method or annealing processing such as the SA method of gradually decreasing a temperature value. For example, the accelerator card 200 searches for a solution in accordance with commands from the CPU 101 and outputs the found solution.

The SA method is a technique of sampling states following a Boltzmann distribution with a temperature value and gradually decreasing the temperature value used for the sampling from the highest temperature value to the lowest temperature value, so as to find an optimal solution efficiently. For example, with the SA method, the accelerator card 200 repeats an operation of repeating a trial of state transition with a fixed temperature value a fixed number of times and then decreasing the temperature value. For the trial of state transition, for example, a serial selection MCMC method may be used, which selects the plurality of state variables included in the energy function one by one in a predetermined order, e.g., in order of index and conducts a trial on whether to change the value of the selected state variable. Alternatively, for the trial of state transition, a parallel trial may be conducted, which conducts trials in parallel across a plurality of state variables.

For example, in the parallel trial, the determination based on Equation (5) is performed in parallel across the plurality of state variables, and the value of any state variable is updated on the basis of the results of the parallel determination, to thereby find a solution. In this case, the accelerator card 200 may use the rejection-free MCMC method that exclusively and always selects one of all neighboring states that have a hamming distance of one from a certain state, with a probability given by Equation (6) and makes a transition.

$$P_i = \frac{A_i}{\sum_{i=1}^{N} A_i} \qquad (6)$$

The selection with the probability given by Equation (6) is equivalent to generating a uniform random number $r_i$ of [0,1] and obtaining the minimum value of random number key: $\max(0, \Delta E_i) + T\log(-\log(r_i))$ generated based on $r_i$. Here, the base of the logarithm is Euler's number. That is, in the rejection-free MCMC method, the index specified by k in Equation (7) may be selected as a transition target.

$$k = \mathrm{argmin}\left[\max(0, \Delta E_i) + T\log(-\log(r_i))\right] \qquad (7)$$

In addition, in order to prevent a reduction in the efficiency of finding a solution in the parallel trial, a partial neighbor search (PNS) method may be used, which adjusts a probability of trying the same state variable in a row to a predetermined value.

The replica exchange method is a technique that performs the MCMC method with a plurality of temperature values independently, and exchanges temperature values between the states obtained with the temperature values as appropriate. The MCMC method with low temperature searches a narrow state space and the MCMC method with high temperature searches a wide state space, which enables finding a good solution efficiently. For example, with the replica exchange method, the accelerator card 200 repeats an operation of conducting trials of state transition with a plurality of temperature values individually in parallel, and each time conducting each trial a fixed number of times, exchanging temperature values between the states obtained at the respective temperature values with a predetermined exchange probability.

More specifically, replicas with inverse temperatures $\beta_k$ and $\beta_{k+1}$ are taken as $x^k$ and $x^{k+1}$, and energies H after the replicas perform the MCMC update operation a predetermined number of times are taken as $H_k$ and $H_{k+1}$. In this case, the probability of accepting the temperature exchange between the replicas $x^k$ and $x^{k+1}$, i.e., the exchange probability A is given by Equation (8).

$$A(\boldsymbol{x}^k \leftrightarrow \boldsymbol{x}^{k+1}) = \min\left[1, \exp\left[-(\beta_k - \beta_{k+1})(H_{k+1} - H_k)\right]\right] \qquad (8)$$

The accelerator card 200 includes a DRAM 210 and a computing device 220. The DRAM 210 holds data including problem information that is used for search by the computing device 220. The DRAM 210 also holds coupling coefficients for all pairs of the plurality of state variables included in the energy function, i.e., all the coupling coefficients. The number of state variables is taken as N. All the coupling coefficients are collectively represented by an N-by-N matrix, i.e., a coupling coefficient matrix. The computing device 220 is a computing unit that executes a solution search function with the MCMC method in the accelerator card 200. The computing device 220 is implemented by an FPGA, GPU, ASIC, or another, for example.

Hardware devices that search for solutions to Ising problems, such as the accelerator card 200 and computing device 220, may be called Ising machines or Boltzmann machines.

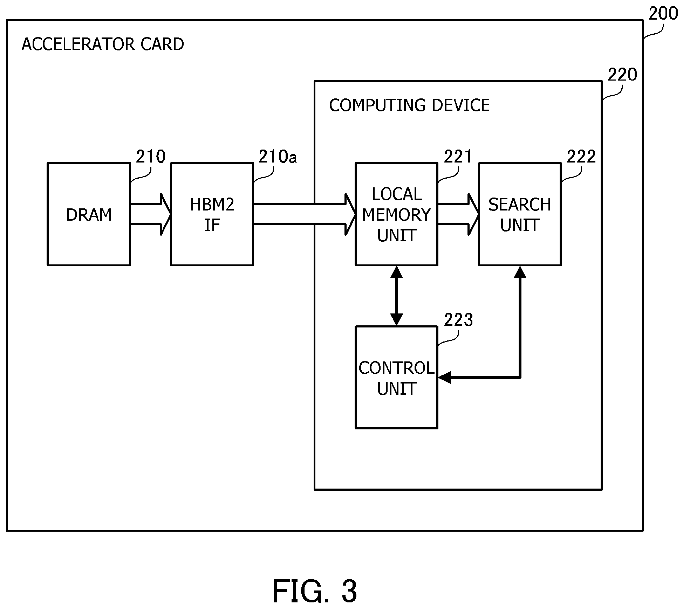

FIG. 3 illustrates an example of hardware of the accelerator card.

The accelerator card 200 includes a high bandwidth memory (HBM2) interface (IF) 210a in addition to the above-described DRAM 210 and computing device 220. The HBM2 IF 210a is an interface that connects the DRAM 210 and the computing device 220.

The computing device 220 includes a local memory unit 221, a search unit 222, and a control unit 223. The local memory unit 221 is an on-chip memory space to store some of coupling coefficients read from the DRAM 210. The local memory unit 221 is used as a cache to store data to be used by the search unit 222 in processing. As the local memory unit 221, a storage space of an SRAM provided in the computing device 220 is used, for example. The local memory unit 221 has a smaller storage capacity than the DRAM 210. The computing device 220 is able to access data held in the local memory unit 221 faster than that held in the DRAM 210. For example, the access time from the computing device 220 to the DRAM 210 is about two orders of magnitude longer than that to the local memory unit 221 that is an on-chip **RAM.** In addition, the local memory unit 221 limits the scale of problem in order to store all coupling coefficients for the problem. Therefore, with respect to a problem scale with a relatively large number of state variables, i.e., bits, the local memory unit 221 would not be able to store its coupling coefficients all together.

The search unit 222 is an execution engine that conducts solution search based on the MCMC method. The search unit 222 finds a solution using coupling coefficients stored in the local memory unit 221.

The control unit 223 determines a set of two or more state variables that are used as trial targets by the search unit 222 among the plurality of state variables, i.e., indices for the state variables of a trial target set, and notifies the search unit 222 of the indices. The number of state variables belonging to the trial target set is m. Here, m is an integer that is equal to or greater than two and less than N. The control unit 223 then determines the row indices and column indices of coupling coefficients to be read in the local memory unit 221 on the basis of the indices for the state variables, and controls the reading of the coupling coefficients from the DRAM 210 into the local memory unit 221.

In this connection, the DRAM 210 may be called an external memory or an external storage device, in contrast to the local memory unit 221.

Here, the DRAM 210 is an example of the storage device 20 of the first embodiment. The computing device 220 is an example of the processing unit 12 of the first embodiment. The local memory unit 221 is an example of the storage unit 11 of the first embodiment. The accelerator card 200 is an example of the information processing apparatus 10 of the first embodiment.

In this connection, an electronic circuit including the search unit 222 and control unit 223 in the computing device 220, such as an FPGA or GPU, may be an example of the processing unit 12 of the first embodiment. In addition, the computing device 220 may be an example of the information processing apparatus 10 of the first embodiment. Further, the data processing apparatus 100 may be an example of the information processing apparatus 10 of the first embodiment.

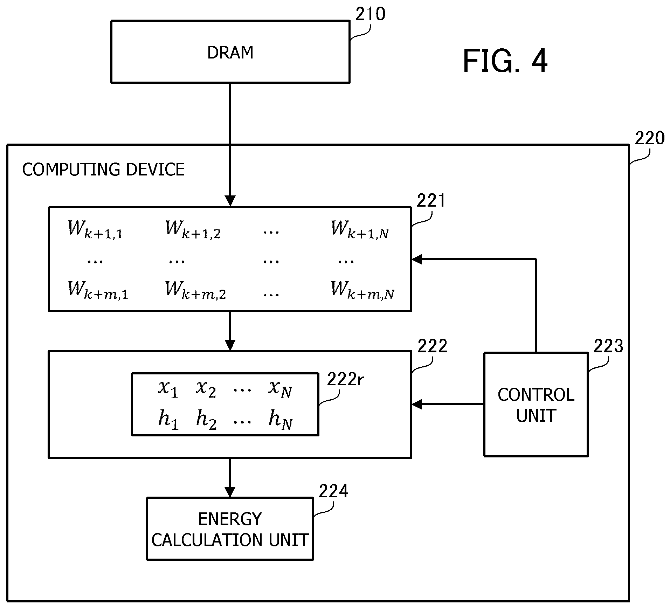

FIG. 4 illustrates an example of functions of the computing device.

The DRAM 210 stores all coupling coefficients $W = \{W_{ij}\}$ arranged in N rows and N columns. Note that $W_{ij} = W_{ji}$ and $W_{ii} = 0$.

The local memory unit 221 stores, among all the coupling coefficients W, some coupling coefficients associated with the indices of the state variables of a current trial target set. For example, assuming that the indices of the state variables of the current trial target set are in the range of k+1 to k+m, the local memory unit 221 stores the coefficient rows with row indices k+1 to k+m and column indices 1 to N among all the coupling coefficients W. The coefficient rows indicate rows with row indices included in the coupling coefficient matrix.

The search unit 222 stores the values of the N state variables $x_1$ to $x_N$ and the local fields $h_1$ to $h_N$ of the state variables $x_1$ to $x_N$. For example, information indicating the values of the state variables $x_1$ to $x_N$ and the local fields $h_1$ to $h_N$ is held in a variable storage unit 222r of the search unit 222. The variable storage unit 222r is a register, for example. As an example, the coupling coefficient $W_{ij}$ corresponding to a pair of state variables $x_i$ and $x_j$ may be set with 16 bits. The bias $b_i$ in Equation (1) may be set with 28 bits, for example. The local field $h_i$ may be set with 29 bits, for example.

The search unit 222 conducts a trial on whether to update the value of any state variable belonging to the current trial target set, using the coupling coefficients stored in the local memory unit 221. More specifically, the search unit 222 calculates an energy change due to an update of the value of a state variable from Equation (2). The search unit 222 then determines whether to accept the change of the value of the state variable on the basis of Equation (5), and when determining to accept the change, updates the value of the state variable. When updating the value of the state variable, the search unit 222 updates the local fields of the other state variables according to Equation (4) using the coupling coefficients associated with the state variable, stored in the local memory unit 221.

For the trial on whether to update the value of any state variable, the search unit 222 may use the above-described serial selection MCMC method or a parallel trial on the m state variables belonging to the trial target set.

After the search unit 222 conducts the trial r times by repeatedly using the coupling coefficients stored in the local memory unit 221, the control unit 223 changes the trial target set. Here, r is an integer of two or greater. For example, in the case of the serial selection MCMC method, r may be set to m or greater. To change the trial target set, the control unit 223 changes the indices for the state variables included in the trial target set.

In addition, the computing device 220 further includes an energy calculation unit 224. The energy calculation unit 224 calculates the energy corresponding to the current values of the N state variables by adding energy change calculated for a state variable whose value has been updated, to the energy of the initial state in a cumulative fashion.

A set of indices for the trial target set may be called a window. The indices belonging to the window may be consecutive or nonconsecutive.

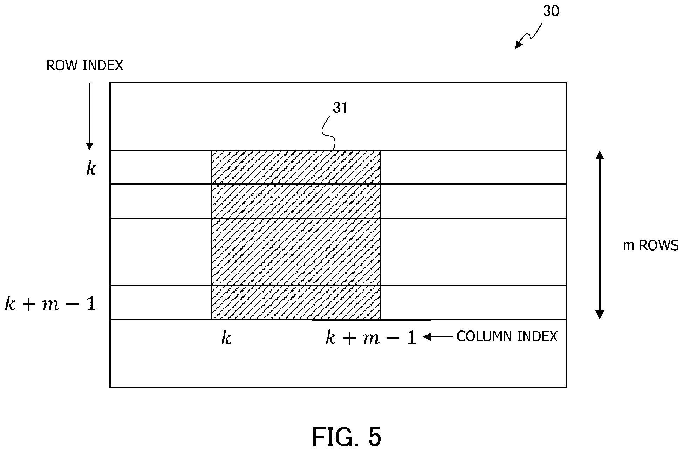

FIG. 5 illustrates an example of the coupling coefficient matrix.

The coupling coefficient matrix 30 represents all coupling coefficients W. In this example, the local memory unit 221 stores coefficient rows with row indices corresponding to the indices belonging to a window. For example, in the case where the indices belonging to the window are in the range of k to k+m-1, the local memory unit 221 stores m rows with row indices k to k+m-1, i.e., m coefficient rows out of the coupling coefficient matrix 30. The search unit 222 uses a block 31 with row indices k to k+m-1 and column indices k to k+m-1 in the m rows for updating the local fields of the state variables belonging to the trial target set. The search unit 222 uses the rest of the m rows other than the block 31 for updating the local fields of the state variables that do not belong to the trial target set.

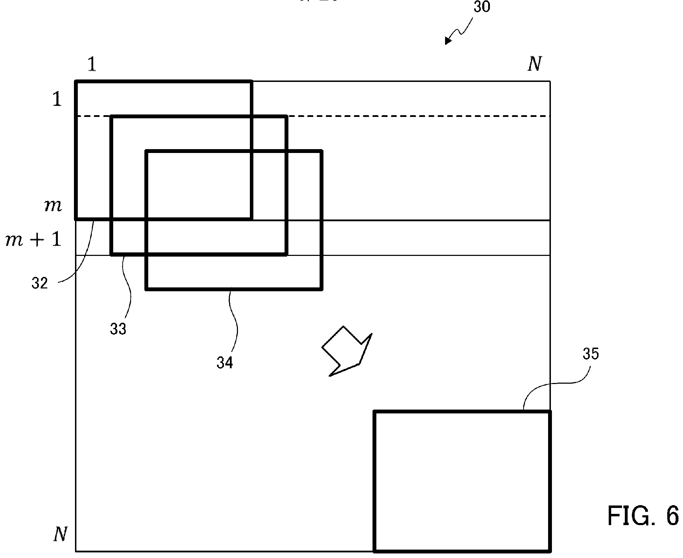

FIG. 6 illustrates an example of reading coupling coefficients.

The control unit 223 causes the search unit 222 to repeat search while changing the indices for the state variables belonging to the trial target set, so that the search unit 222 targets all the N state variables in trials. For example, with the indices 1 to m as initial values for the state variables belonging to the trial target set, the control unit 223 updates the indices by increasing each index by one. In this case, the control unit 223 removes a coefficient row with the minimum row index from the local memory unit 221 and stores a coefficient row with new row index read from the DRAM 210 in the local memory unit 221.

According to the update of the indices for the state variables belonging to the trial target set, a block to be used for updating the local fields of the state variables belonging to the trial target set out of the coupling coefficient matrix 30 is changed in order of blocks 32, 33, 34, ..., 35. After one-round search that targets all state variables in trials while changing the block is completed, the control unit 223 performs the one-round search again from the beginning.

In this connection, in the above example, coefficient rows newly read from the DRAM 210 are selected one row by one row such that the row indices are consecutive. Alternatively, the control unit 223 may newly read two or more coefficient rows at a time or may select coefficient rows such that the row indices are nonconsecutive.

For example, in the case of performing the SA method, after the control unit 223 conducts one-round search with a temperature value a plurality of times, it updates the temperature value and conducts the search with the next temperature value. The following describes an example of processing of the computing device 220 that performs the SA method.

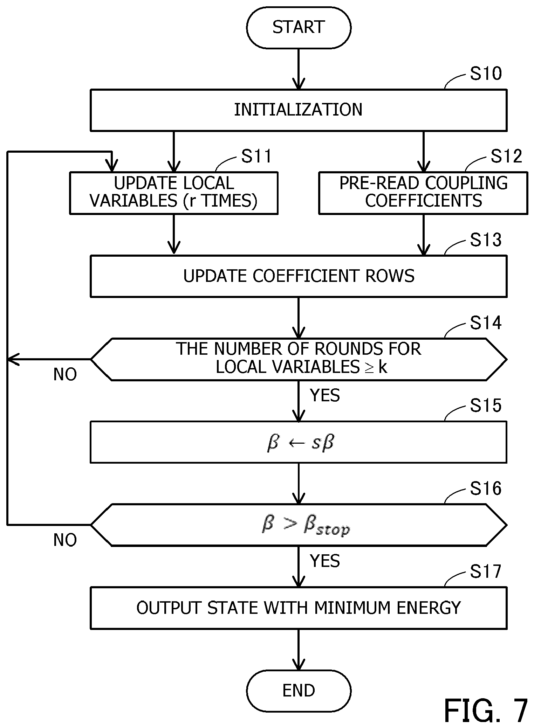

FIG. 7 is a flowchart illustrating an example of processing of the computing device.

(S10) The control unit 223 initializes the local memory unit 221 and search unit 222. For example, the control unit 223 sets an initial inverse temperature $\beta_{start}$, a final inverse temperature $\beta_{stop}$, a temperature coefficient s, the number m of state variables in a trial target set, the number r of iterations, an initial state, an energy E of the initial state, and a temperature change interval k. The temperature coefficient s is greater than one. In addition, the control unit 223 reads coefficient rows with the first m rows from the DRAM 210 and stores the read coefficient rows in the local memory unit 221.

(S11) The search unit 222 conducts a trial of updating local variables on the basis of the coupling coefficients stored in the local memory unit 221 r times, **i.e.,** a plurality of times. Here, the local variables are the state variables in the trial target set and the local fields corresponding to the state variables.

(S12) During the execution of step S11, the control unit 223 pre-reads coefficient rows for the coupling coefficients associated with the state variables of the next trial target set from the DRAM 210.

After both steps S11 and S12 are completed, the process proceeds to step S13. For example, if one of steps S11 and S12 is completed first, the process proceeds to step S13 after the other step is completed.

(S13) The control unit 223 updates the coefficient rows held in the local memory unit 221 using the coefficient rows pre-read at step S12. In addition, the control unit 223 updates the indices for the trial target set in the search unit 222, **i.e.,** the indices for the local variables.

(S14) The control unit 223 determines whether the number of rounds each of which targets all the indices of the local variables is greater than or equal to **k.** If the number of rounds each targeting the indices of the local variables is greater than or equal to k, the process proceeds to step S15. If the number of rounds each targeting the indices of the local variables is less than k, the process proceeds to steps S11 and S12.

(S15) The control unit 223 updates the inverse temperature $\beta$ used by the search unit 222 to $s\beta$.

(S16) The control unit 223 determines whether $\beta > \beta_{stop}$. If $\beta > \beta_{stop}$, the process proceeds to step S17. If $\beta \leq \beta_{stop}$, the process proceeds to steps S11 and S12.

(S17) The control unit 223 outputs a state that provides the minimum energy obtained in the search by the search unit 222.

In this connection, the computing device 220 may be provided with a plurality of search units including the search unit 222 and may perform the replica exchange method with the plurality of search units. In this case, in the temperature update of step S15, the search unit 222 may exchange inverse temperatures with another search unit with a predetermined exchange probability. In addition, in the case of the replica exchange method, the determination of step S16 may be performed based on whether a predetermined time has passed from the initialization of step S10, for example.

In addition, at step S11, the search unit 222 may conduct a trial with the serial selection MCMC method of selecting the state variables in the trial target set, at random or in order of index. Alternatively, the search unit 222 may conduct a parallel trial that targets the m state variables in the trial target set with the rejection-free MCMC method. In the rejection-free MCMC method, the value of any one of the m state variables is updated in one execution of the parallel trial. In addition, the search unit 222 may use the PNS method in the parallel trial. In the case of the parallel trial, the control unit 223 performs the determination of step S14 based on whether the parallel trial on the m state variables has been conducted k times. The following describes an example of functions of the search unit 222 for the parallel trial.

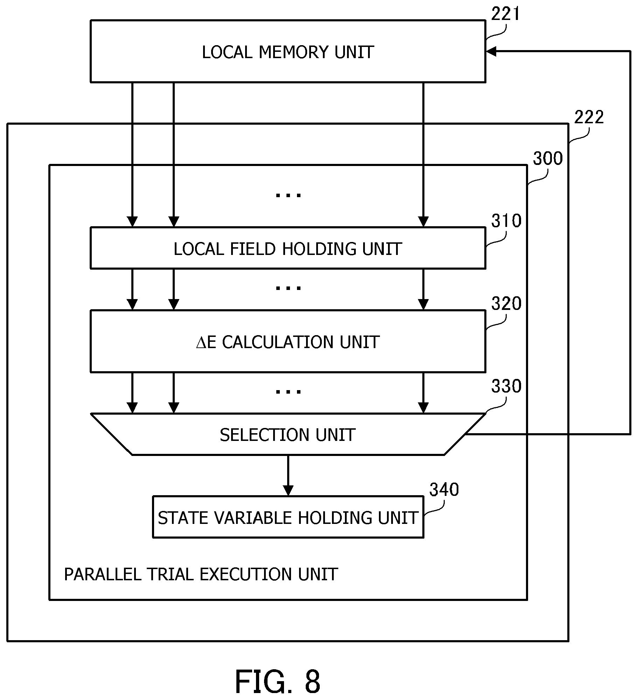

FIG. 8 illustrates an example of a parallel trial execution unit.

The search unit 222 may include a parallel trial execution unit 300. The parallel trial execution unit 300 conducts a parallel trial on the m state variables of a trial target set. The parallel trial execution unit 300 includes a local field holding unit 310, a $\Delta E$ calculation unit 320, a selection unit 330, and a state variable holding unit 340. The local field holding unit 310 holds m local fields corresponding to the m state variables. In this connection, the local field holding unit 310 may hold N local fields corresponding to the N state variables. The $\Delta E$ calculation unit 320 calculates, in parallel, energy changes respectively due to changes in the values of the m state variables in the current state, using the m local fields held in the local field holding unit 310. The $\Delta E$ calculation unit 320 outputs the m energy changes respectively calculated for the m state variables to the selection unit 330. The selection unit 330 selects an index whose value is to be updated among the indices of the m state variables and notifies the state variable holding unit 340 and local memory unit 221 of the selected index.

The state variable holding unit 340 holds the state variables corresponding to all indices. The state variable holding unit 340 updates the value of the state variable corresponding to the index received from the selection unit 330.

In addition, the local memory unit 221 outputs the coupling coefficients corresponding to pairs each including the index received from the selection unit 330 and one of the other indices in the trial target set to the local field holding unit 310. For example, the reading of the coupling coefficients based on the index from the local memory unit 221 into the local field holding unit 310 may be performed by an address decoder. The local field holding unit 310 updates the local fields corresponding to the other state variables of the trial target set according to Equation (4) using the coupling coefficients.

In this connection, in the case where the local field holding unit 310 holds the N local fields corresponding to the N state variables, the local memory unit 221 may output coupling coefficients corresponding to pairs each including the index received from the selection unit 330 and one of all the other indices to the local field holding unit 310. In this case, the local field holding unit 310 may update the local fields of all the other state variables according to Equation (4) using the coupling coefficients. In the case where the local field holding unit 310 updates only the local fields of the state variables belonging to the trial target set, the update of the local fields of the other state variables is performed by a predetermined calculation unit provided in the search unit 222.

In addition, the search unit 222 may use the PNS method in the rejection-free MCMC method based on Equation (7). The technique that is a combination of the PNS method with the rejection-free MCMC method is called a PNS rejection-free (RF) method.

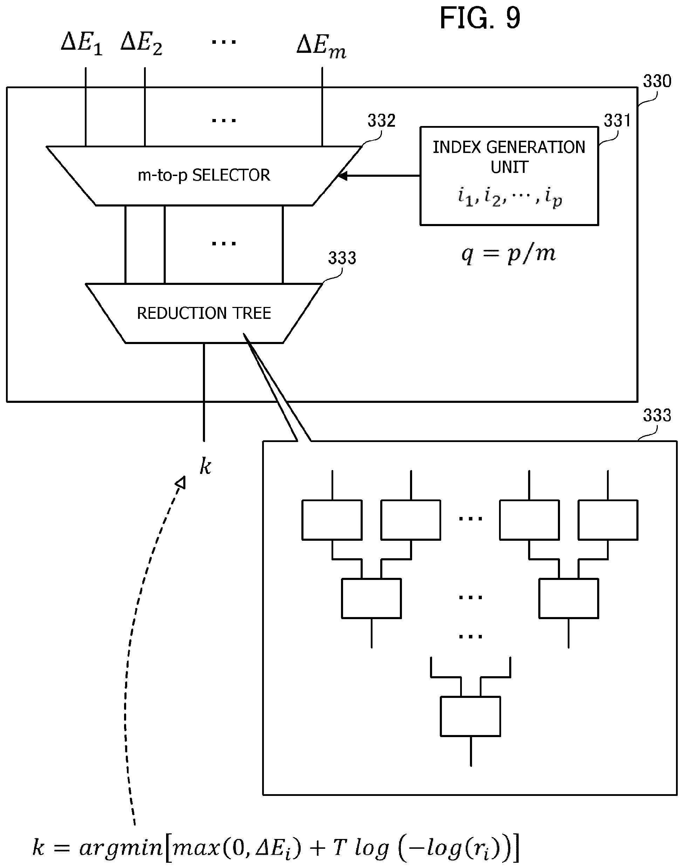

FIG. 9 illustrates an example of the selection unit that performs the PNS RF method.

Here, assume as an example that m energy changes $\Delta E_1$ to $\Delta E_m$ are input to the selection unit 330. The selection unit 330 includes an index generation unit 331, an m-to-p selector 332, and a reduction tree 333. The index generation unit 331 generates p indices $i_1, i_2, ..., i_p$, and outputs them to the m-to-p selector 332. Here, p is an integer satisfying $2 \leq p < m$. For example, the index generation unit 331 may generate a uniform random number of [0,1] for each of the m indices, and generate p indices by selecting p random numbers from the m random numbers in decreasing order.

The m-to-p selector 332 selects energy changes corresponding to the p indices received from the index generation unit 331, from the received m energy changes $\Delta E_1$ to $\Delta E_m$ and outputs the selected energy changes to the reduction tree 333.

The reduction tree 333 applies the p energy changes received from the m-to-p selector 332 to Equation (7) and outputs an index k. For example, the reduction tree 333 is implemented by a selector tree, which is formed of selectors with two inputs and one output being combined at multiple stages in a tree form.

As described above, in each trial, the search unit 222 may select transition destinations with a ratio of q = p/m from all neighbors with a hamming distance of one from the current state and select a transition destination from the selected ones with the rejection-free method. The ratio q is preset in the search unit 222. For example, q is set to 0.5. In this connection, the search unit 222 may use a method of selecting a fixed number of transition destinations without duplication or a selection method allowing duplication, as a method of selecting transition destinations with the PNS method. The search unit 222 performs the PNS RF method in this way to control the probability of trying the same state variable in a row and thus to improve the efficiency of finding a solution.

As described above, the computing device 220 uses coupling coefficients read from the DRAM 210 and stored in the local memory unit 221 in a plurality of trials. This allows the computing device 220 to reduce the frequency of access to the DRAM 210. Therefore, a decrease in processing speed due to the access to the DRAM 210 is prevented. As a result, it is achieved to accelerate solving a large-scale problem in which the total size of coupling coefficients is relatively large. In addition, in the example of the second embodiment, it is possible to reduce the needed memory capacity of the local memory unit 221 to N*m, in contrast to the total size of coupling coefficients being $N^2$. The reduction ratio in the memory capacity is m/N.

(Third Embodiment)

A third embodiment will now be described. Different features from the above-described second embodiment will be mainly described and the description of the same features will be omitted. A data processing apparatus 100 of the third embodiment is implemented with the same hardware as in the second embodiment.

The second embodiment has described the example in which the local fields of all state variables are updated each time the value of a state variable belonging to a trial target set is updated.

By contrast, in the third embodiment, the local fields of the state variables belonging to a trial target set are updated each time the value of a state variable $x_j$ in the trial target set is updated. Changes to the local fields of the other state variables due to the update of the value of the state variable $x_j$ are made when the state variable $x_j$ is excluded from the trial target set.

The third embodiment has the same feature as the second embodiment in that coupling coefficients for respective pairs of state variables belonging to the current trial target set, for example, the coupling coefficients belonging to the block 31 out of the coupling coefficient matrix 30 illustrated in FIG. 5 are held in the local memory unit 221. The third embodiment, however, has a different feature from the second embodiment in that coupling coefficients for respective pairs each including one of the state variables belonging to the current trial target set and one of the other state variables that do not belong to the current trial target set are not read from the DRAM 210 into the local memory unit 221.

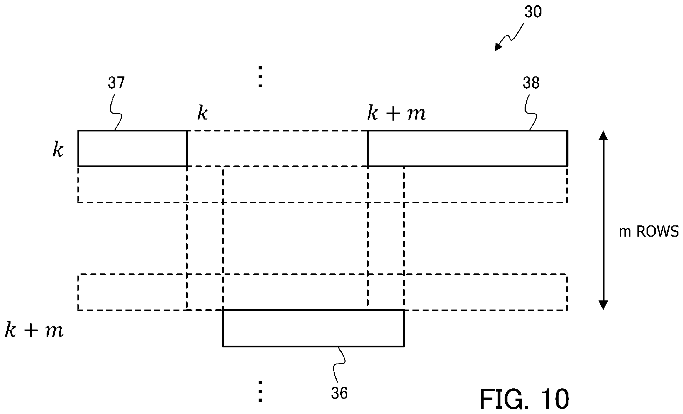

FIG. 10 illustrates an example of reading coupling coefficients according to the third embodiment.

When the state variables of the trial target set are changed from a set of $x_k$ to $x_{k+m-1}$ to a set of $x_{k+1}$ to $x_{k+m}$, for example, a block 36 with column indices k+1 to k+m in a row with row index k+m of the coupling coefficient matrix 30 is read from the DRAM 210. In addition, for example, a block 37 with column indices 1 to k-1 and a block 38 with column indices k+m to N in a row with row index k of the coupling coefficient matrix 30 are read from the DRAM 210. In this case, a block with column indices k to k+m-1 in the row with row index k is complemented by the control unit 223 using information previously stored in the local memory unit 221, for example.

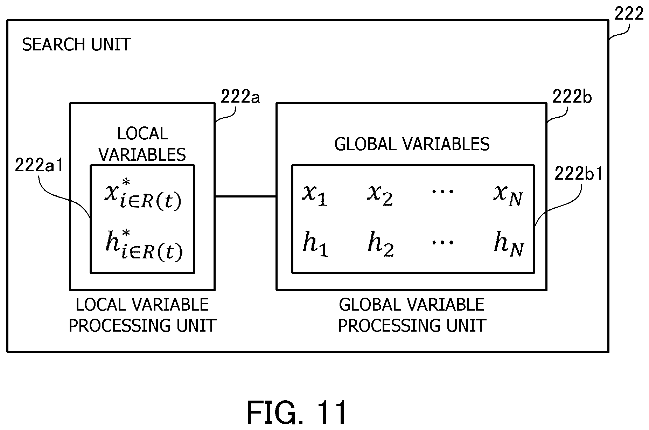

FIG. 11 illustrates an example of a search unit.

The search unit 222 includes a local variable processing unit 222a and a global variable processing unit 222b. The local variable processing unit 222a updates local variables. The local variables are the state variables of a trial target set and the local fields corresponding to the state variables. The state variables belonging to the local variables are the state variables of the trial target set. The local variables are held in a local variable storage unit 222a1 provided in the local variable processing unit 222a, for example. The local variable storage unit 222a1 is a register, for example. The number of indices of the local variables is m.

Here, a set of indices for the state variables belonging to the local variables at time step t is taken as R(t). The time step t refers to a period of time from immediately after a change of the trial target set until the next change of the trial target set. In addition, an asterisk mark "*" is attached at the upper right part in each of the state variables and local fields belonging to the local variables. The local variables at time step t are represented by $(x_{i \in R(t)}{}^*, h_{i \in Rt}{}^*)$.

The global variable processing unit 222b updates global variables. The global variables are held separately from the local variables, and are all N variable state variables ($x_1$ to $x_N$) and the local fields ($h_1$ to $h_N$) corresponding to the N state variables. In other words, the global variables are all state variables and their local fields, including the local variables. The global variables are held in a global variable storage unit 222b1 provided in the global variable processing unit 222b, for example. The global variable storage unit 222b1 is a register, for example.

With respect to a certain state variable $x_i$, the global variables hold the value of the state variable $x_i{}^{(0)}$ at the time when the state variable $x_i$ and its local field $h_i$ are added to the local variables. Then, when the state variable $x_i$ is excluded from the local variables, the state variable $x_i$ and local fields $h_1$ to $h_N$ in the global variables are updated on the basis of the difference between $x_i{}^*$ at this time and $x_i{}^{(0)}$.

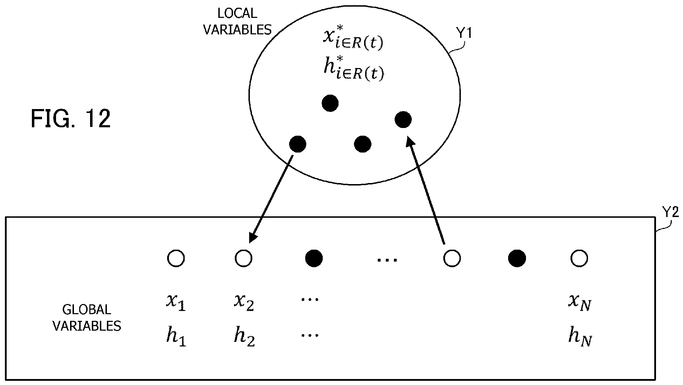

FIG. 12 illustrates an example of the relationship between local variables and global variables.

A local variable set Y1 is a whole set of local variables. A global variable set Y2 is a whole set of global variables. Local variables included in the local variable set Y1 are excluded from the local variable set Y1 by changing indices for a trial target set, i.e., indices for the local variables. At this time, the global variable processing unit 222b updates the values of the global variables on the basis of the values of the local variables.

For example, when a state variable $x_2{}^*$ is excluded from the local variables, the global variable processing unit 222b sets $x_2$ to the value of $x_2{}^*$. In addition, the global variable processing unit 222b updates the other local fields $h_1$ to $h_N$ in the global variables according to Equation (4) using the difference between $x_2{}^*$ and $x_2$. At this time, the global variable processing unit 222b uses the coupling coefficients in the row with row index 2 read from the DRAM 210.

In addition, when the indices for the local variables are changed, new local variables are added to the local variable set Y1. At this time, the local variable processing unit 222a generates the values of the local variables to be added, on the basis of the values of the global variables corresponding to the local variables to be added, the values of the state variables in the other local variables, and the coupling coefficients associated with the local variables to be added.

For example, assuming that the indices of the local variables are consecutive and the index of local variables to be added is k+m, the local variable processing unit 222a sets $x_{k+m}{}^* = x_{k+m}$. In addition, the local variable processing unit 222a calculates the local field $h_{k+m}{}^*$ from Equation (9).

$$h^*_{k+m} \leftarrow h_{k+m} + \sum_{j=k+1}^{k+m} W_{k+m,j} \Delta x^*_j \tag{9}$$

Here, $\Delta x_j{}^*$ denotes the difference between $x_j$ and $x_j{}^*$ at the time of addition of $x_{k+m}{}^*$.

On the other hand, assuming that the indices of the local variables are nonconsecutive and the index of local variables to be added is i, the local variable processing unit 222a sets $x_i{}^* = x_i$. In addition, the local variable processing unit 222a calculates the local field $h_i{}^*$ from Equation (10).

$$h^*_i \leftarrow h_i + \sum_{j \in R(t)} W_{i,j} \Delta x^*_j \tag{10}$$

Here, $\Delta x_j{}^*$ denotes the difference between $x_j$ and $x_j{}^*$ at the time of addition of $x_i{}^*$.

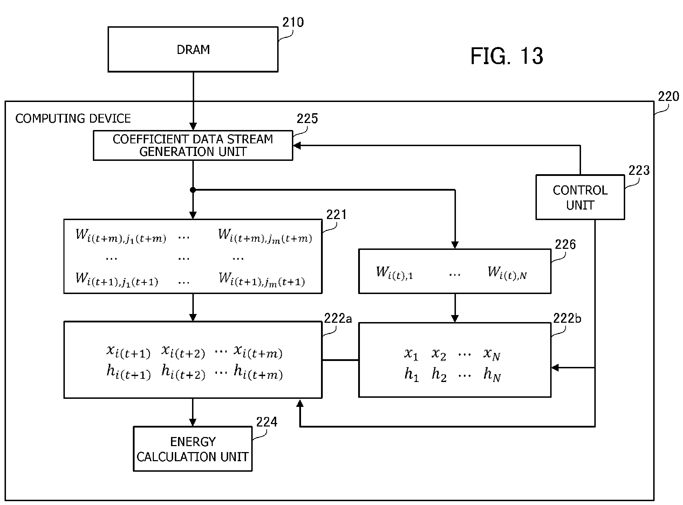

FIG. 13 illustrates an example of functions of the computing device.

The computing device 220 includes local memory units 221 and 226, the local variable processing unit 222a, the global variable processing unit 222b, the control unit 223, an energy calculation unit 224, and a coefficient data stream generation unit 225. For the local memory units 221 and 226, a storage space of an SRAM provided in the computing device 220 is used. The local variable processing unit 222a and global variable processing unit 222b are subdivisions of the functions of the search unit 222 as exemplified in FIG. 11.

The coefficient data stream generation unit 225 reads coupling coefficients from the DRAM 210 and supplies the read coupling coefficients to the local memory units 221 and 226. A data stream for the coupling coefficients supplied from the coefficient data stream generation unit 225 to the local memory units 221 and 226 is called a coefficient data stream. The coefficient data stream generation unit 225 supplies coupling coefficients to be used by the local variable processing unit 222a to the local memory unit 221. The coefficient data stream generation unit 225 supplies coupling coefficients to be used by the global variable processing unit 222b to the local memory unit 226.

The local variable processing unit 222a uses the coupling coefficients stored in the local memory unit 221 to conduct a trial on whether to update the value of any state variable belonging to the local variables. More specifically, the local variable processing unit 222a calculates an energy change due to update of the value of a certain state variable from Equation (2). Then, the local variable processing unit 222a determines on the basis of Equation (5) whether to accept the change of the value of the state variable, and when determining to accept the change, updates the value of the state variable. When updating the value of the state variable, the local variable processing unit 222a updates the local fields of the other local variables according to Equation (4) using the coupling coefficients associated with the state variable, stored in the local memory unit 221.

The global variable processing unit 222b updates the global variables with the method of FIG. 12 using the coupling coefficients stored in the local memory unit 226. The update of the global variables by the global variable processing unit 222b may be performed in parallel to trials conducted by the local variable processing unit 222a.

Here, FIG. 13 illustrates, as an example, information that is held at time step t+m in the local memory units 221 and 226 and local variable processing unit 222a. An index i(t) indicates the index of a state variable added to the local variables at time step t.

The control unit 223 controls indices that are targets for processing of the local variable processing unit 222a, global variable processing unit 222b, and coefficient data stream generation unit 225.

The energy calculation unit 224 calculates the energy corresponding to the current values of the N state variables by adding energy change calculated for a state variable whose value has been updated in the local variables, to the energy of the initial state in a cumulative fashion.

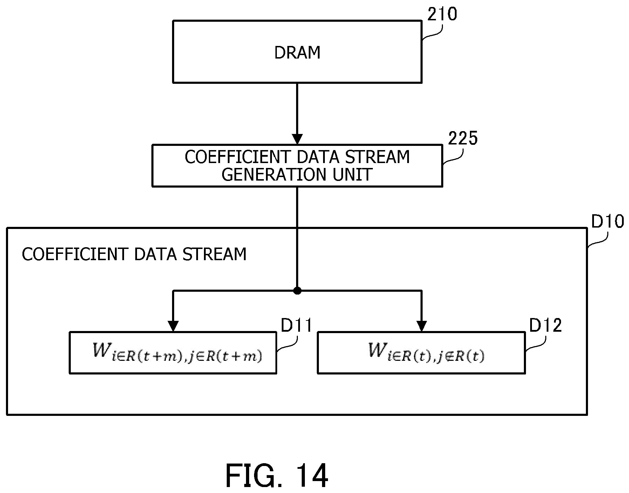

FIG. 14 illustrates an example of generating a coefficient data stream.

The coefficient data stream generation unit 225 reads coupling coefficients from the DRAM 210 and generates a coefficient data stream D10. The coefficient data stream D10 includes coefficient data D11 and coefficient data D12. The coefficient data D11 is the data of coupling coefficients associated with an index added this time to the local variables. The coefficient data D11 is stored in the local memory unit 221. The coefficient data D12 is the data of coupling coefficients associated with an index excluded this time from the local variables. The coefficient data D12 is stored in the local memory unit 226.

For example, at time step t+m, the coefficient data D11 is represented by $W_{i \in R(t+m), j \in R(t+m)}$. In addition, at time step t+m, the coefficient data D12 is represented by $W_{i \in R(t), j \in 3(\neg R(t))}$. Here, "¬R(t)" is a complementary set of R(t). This notation example of the coefficient data D12 is equivalent to that of the coefficient data D12 of FIG. 14. In addition, the left index in the subscript of W indicates the index of a state variable added to the local variables at that time step.

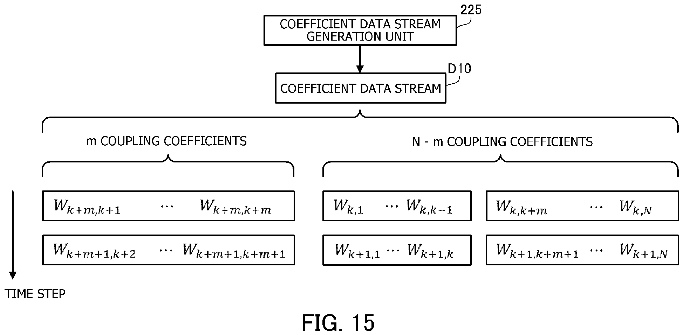

FIG. 15 illustrates a first example of a coefficient data stream.

In the case where indices for the local variables are increased one by one consecutively, the coefficient data stream generation unit 225 generates a coefficient data stream D10 as described below, for example.

At certain time step, the coefficient data stream generation unit 225 supplies m coupling coefficients $W_{k+m,k+1}, \ldots$, $W_{k+m,k+m}$ to the local memory unit 221. At the same time, the coefficient data stream generation unit 225 also supplies N-m coupling coefficients $W_{k,1}, \ldots, W_{k,k-1}$ and $W_{k,k+m}, \ldots, W_{k,N}$ to the local memory unit 226. The computing device 220 may omit reading the coupling coefficients $W_{k,k}$ to $W_{k,k+m-1}$ corresponding to a plurality of pairs each including the state variable $x_k$ excluded from the local variables (the current trial target set) at the current time step and one of $x_k$ to $x_{k+m-1}$ that belonged to the local variables (previous trial target set) at the previous time step. This reduces the memory bandwidth for reading from the DRAM 210.

At the next time step, the coefficient data stream generation unit 225 supplies m coupling coefficients $W_{k+m+1,k+2}, \ldots, W_{k+m+1,k+m+1}$ to the local memory unit 221. At this time, the coefficient data stream generation unit 225 also supplies N-m coupling coefficients $W_{k+1,1}, \ldots, W_{k+1,k}$ and $W_{k+1,k+m+1}, \ldots, W_{k+1,N}$ to the local memory unit 226.

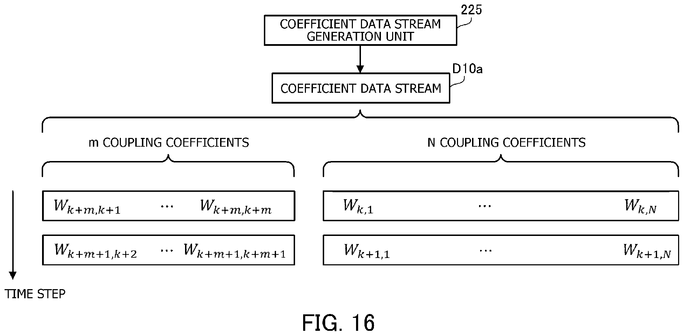

FIG. 16 illustrates a second example of the coefficient data stream.

In the case where the indices for the local variables are increased one by one consecutively, the coefficient data stream generation unit 225 may generate a coefficient data stream D10a as described below, instead of the coefficient data stream D10.

At the certain time step, the coefficient data stream generation unit 225 supplies m coupling coefficients $W_{k+m,k+1}, \ldots, W_{k+m,k+m}$ to the local memory unit 221. At the same time, the coefficient data stream generation unit 225 also supplies N coupling coefficients $W_{k,1}, \ldots, W_{k,N}$ to the local memory unit 226.

At the next time step, the coefficient data stream generation unit 225 supplies m coupling coefficients $W_{k+m+1,k+2}, \ldots, W_{k+m+1,k+m+1}$ to the local memory unit 221. At this time, the coefficient data stream generation unit 225 also supplies N coupling coefficients $W_{k+1,1}, \ldots, W_{k+1,N}$ to the local memory unit 226.

The use of the coefficient data stream D10 enables reducing the memory bandwidth for reading from the DRAM 210, as compared with the use of the coefficient data stream D10a. On the other hand, the use of the coefficient data stream D10a enables eliminating data processing that is performed at the time of reading coupling coefficients from the DRAM 210 and data processing that is performed at the time of storing the coupling coefficients in the local memory unit 226, and thus enables accelerating the reading of the coupling coefficients, as compared with the use of the coefficient data stream D10.

The following describes an example of calculating energy by the energy calculation unit 224 according to the third embodiment.

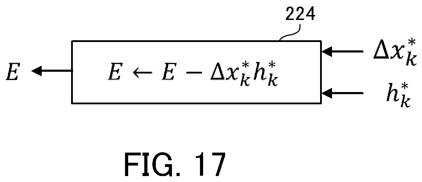

FIG. 17 illustrates an example of calculating energy.

Each time the local variable processing unit 222a updates the value of a state variable $x_k^*$ in the local variables in trials, the energy calculation unit 224 calculates the energy E of a system by adding $\Delta E = -\Delta x_k^* h_k^*$ using the change $\Delta x_k^*$ in the value of the state variable $x_k^*$ in a cumulative fashion. Here, the system indicates a state of the Ising model where the local variables have been reflected on the global variables. The energy E is given by Equation (11).

$$E \leftarrow E - \Delta x_k^* h_k^* \qquad (11)$$

In this connection, the computing device 220 of the third embodiment performs the SA method in the same manner as described with reference to the flowchart exemplified in FIG. 7. Note, however, that the size of coupling coefficients read in the local memory unit 221 is different. In addition, a trial on whether to update the value of any state variable in the local variables is conducted by the local variable processing unit 222a of the search unit 222, using the information held in the local memory unit 221. In addition, the computing device 220 may perform the replica exchange method, instead of the SA method, as described earlier.

The following describes examples of local variable update.

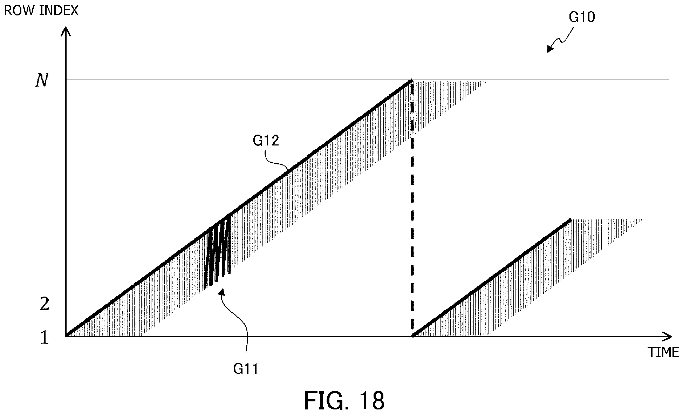

FIG. 18 illustrates a first example of the local variable update.

The local variable processing unit 222a updates the state variables and the local fields corresponding to the state variables in the local variables, using the coupling coefficients stored in the local memory unit 221. For this update, the serial selection MCMC method may be used, which selects the state variables of the local variables, at random or in order of index. A graph G10 represents an example of changes in the row indices of coefficient rows read in the local memory unit 221 with respect to time. In the graph G10, the horizontal axis represents time, whereas the vertical axis represents row index. A series G11 represents an example of selecting the indices of the local variables in order with the serial selection MCMC method and conducting a trial. For example, after the local variable processing unit 222a finishes one round targeting all the indices of the local variables, the control unit 223 updates the indices for the local variables and then reads the next coefficient rows in the local memory unit 221. The local variable processing unit 222a then conducts a trial on the updated indices of the local variables, in order starting with the first index with the serial selection MCMC method.

A series G12 is a comparative example of performing an ordinary serial selection MCMC method on all the indices 1 to N. The series G12 indicates that the indices 1 to N are simply targeted in order with the passage of time.

In addition, the local variable processing unit 222a may conduct a parallel trial on the m state variables of the local variables with the rejection-free MCMC method. In the rejection-free MCMC method, the value of any one of the m state variables is updated in one execution of the parallel trial. Alternatively, the local variable processing unit 222a may use the PNS RF method in the parallel trial. For example, the local variable processing unit 222a may include the parallel trial execution unit 300 exemplified in FIG. 8.

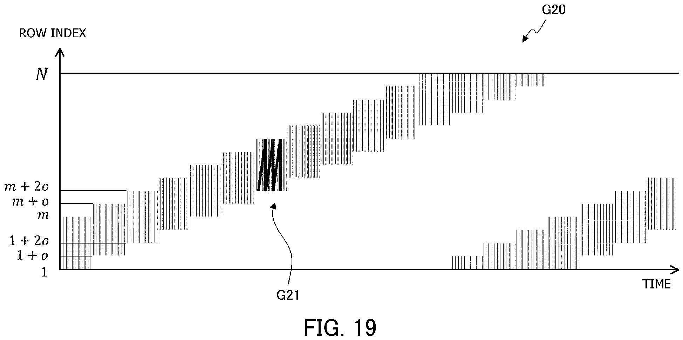

FIG. 19 illustrates a second example of the local variable update.

A graph G20 represents an example of changes in the row indices of coefficient rows read in the local memory unit 221 with respect to time. In the graph G20, the horizontal axis represents time, whereas the vertical axis represents row index. First, the control unit 223 initializes the local memory unit 221 using the first m coefficient rows and then causes the local variable processing unit 222a to conduct search, and then periodically updates the indices for the local variables, o indices at a time, where o is an integer of two or greater. In this case, the coefficient rows in the local memory unit 221 and local memory unit 226 are updated o rows at a time. Here, the remainder of division by N is taken, which enables the row indices to wrap around.

In addition, the control unit 223 updates the indices for the local variables after the reading of coupling coefficients for the next o rows to be added is completed. The control unit 223 is able to pre-read the coupling coefficients for the next o rows. For example, the control unit 223 exercises control such that the time taken by the local variable processing unit 222a to conduct a trial on the state variables belonging to the local variables a plurality of times is longer than the time to read the coupling coefficients for the next o rows from the DRAM 210 and store the coupling coefficients in the local memory unit 221.

A series G21 represents an example of selecting the indices of the local variables in order with the serial selection MCMC method and conducting a trial. For example, the control unit 223 may update the indices for the local variables after the local variable processing unit 222a finishes a plurality of rounds each targeting all the indices of the local variables.

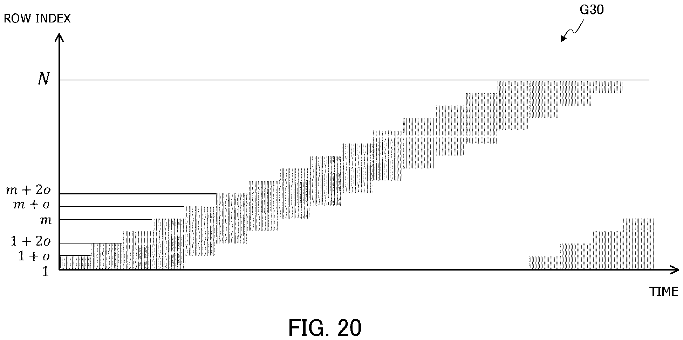

FIG. 20 illustrates a third example of the local variable update.

A graph G30 represents an example of changes in the row indices of coefficient rows read in the local memory unit 221 with respect to time. In the graph G30, the horizontal axis represents time, whereas the vertical axis represents row index.

The local variable processing unit 222a may empty the local memory unit 221 through initialization, and according to the reading of coefficient rows in the local memory unit 221, may start a trial using the coefficient rows read in the local memory unit 221. In this case, the local memory unit 221 is first empty, and then state variables are added to local variables, o state variables at a time, and a trial starts for the state variables. After m state variables are stored, the size of the local variables and the size of the coupling coefficients in the local memory unit 221 are maintained. In this connection, the local variables are not removed until the number of state variables in the local variables reaches **m.**

The above approach eliminates the waiting time until the coefficient rows for the first m rows are stored in the local memory unit 221, which further accelerates problem solving, as compared with the example of FIG. 19. In this connection, the examples of the local variable update in FIGS. 18 to 20 are applicable not only to the third embodiment but also to the second embodiment.

In addition, as described above, the control unit 223 may update the indices for the local variables, o indices at a time, i.e., a plurality of indices at a time. In this case, the coefficient rows in the local memory unit 221 are updated, o coefficient rows at a time, i.e., a plurality of rows at a time, as well. The following describes the process of updating a plurality of rows.

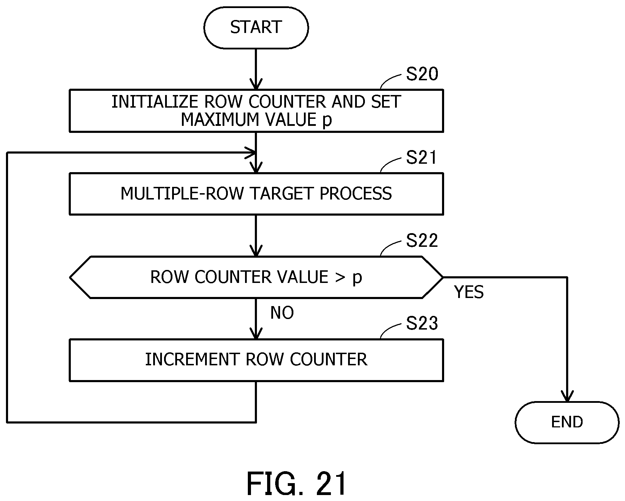

FIG. 21 is a flowchart illustrating an example of updating a plurality of rows.

(S20) The control unit 223 initializes a row counter. The row counter counts the number of coefficient rows read from the DRAM 210 into the local memory unit 221. In addition, the control unit 223 sets the maximum value p for the row counter.

(S21) The control unit 223 starts a multiple-row target process in order to update indices for local variables. As an example, in the case where the indices for the local variables are updated to a set of 1+o to m+o this time, the control unit 223 controls the coefficient data stream generation unit 225 to pre-read coefficient rows for o rows with the next row indices m+o+1 to m+2o from the DRAM 210. The pre-reading is equivalent to step S12 of the flowchart of FIG. 7. In addition, with respect to the o state variables to be excluded from the local variables, the global variable processing unit 222b updates the values and local fields of the o state variables and the local fields of the other state variables in the global variables. In addition, with respect to the state variables added to the local variables, the local variable processing unit 222a updates the local fields of the state variables. The updates of the global variables and local variables at step S21 are included in the coefficient row update of step S13 of the flowchart of FIG. 7.

(S22) The control unit 223 determines whether the value of the row counter is greater than p. If the row counter value is greater than p, the control unit 223 finishes the current round for all the row indices and moves on to the next round. If the row counter value is less than or equal to p, the process proceeds to step S23.

(S23) The control unit 223 increments the row counter. Then, the process proceeds to step S21.

In this connection, the number o of rows is problem-dependent as it is determined based on the relationship between the number N of state variables corresponding to a problem and the capacity of the local memory unit 221. Therefore, at step S20, the control unit 223 may calculate the maximum value p on the basis of the requisite memory capacity or may set the maximum value p to an appropriate value externally specified.

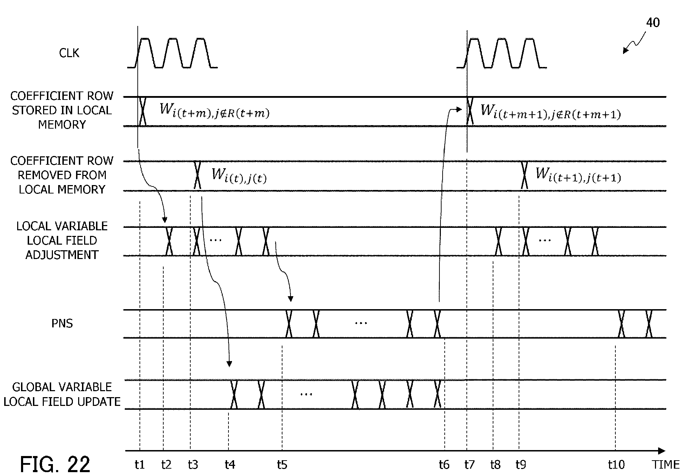

FIG. 22 illustrates an example of a timing chart.

A timing chart 40 is an example of a timing chart of the computing device 220 according to the third embodiment. In the timing chart 40, the horizontal axis represents time. The timing chart 40 has the following items: clock CLK, coefficient row stored in local memory, coefficient row removed from local memory, local variable local field adjustment, PNS, and global variable local field update.

The "CLK" item represents a clock signal of the computing device 220. The "coefficient row stored in local memory" item indicates a coefficient row newly stored in the local memory unit 221. The "coefficient row removed from local memory" item indicates a coefficient row removed from the local memory unit 221. The "local variable local field adjustment" item represents the adjustment of a local field $h_i$* based on Equation (9) or (10). The "PNS" item indicates the execution of the PNS RF method by the local variable processing unit 222a. In this connection, the local variable processing unit 222a may execute the serial selection MCMC method, as described earlier. The "global variable local field update" item indicates the update of local fields $h_1$ to $h_N$ according to a state variable $x_i$ excluded from the local variables.

In the timing chart 40, a direction from time t1 toward time t10 is a positive direction of time. For example, at time t1, the computing device 220 reads a new coefficient row from the DRAM 210 and stores it in the local memory unit 221. After reading the new coefficient row, the computing device 220 starts the local variable local field adjustment at time t2.

Then, at time t3, the computing device 220 removes a coefficient row from the local memory unit 221. After removing the coefficient row, the computing device 220 starts the global variable local field update at time t4.

When the local variable local field adjustment is completed thereafter, the computing device 220 starts the PNS at time t5. The computing device 220 executes the PNS and the global variable local field update in parallel. For example, the computing device 220 completes the PNS and global variable local field update at time t6. Note that the PNS and the global variable local field update may be completed at different timing.

When completing the PN and the global variable local field update, the computing device 220 reads a new coefficient row from the DRAM 210 and stores it in the local memory unit 221 at time t7. After reading the new coefficient row, the computing device 220 starts the local variable local field adjustment at time t8.

Then, the computing device 220 removes a coefficient row from the local memory unit 221 at time t9. After removing the coefficient row, the computing device 220 starts the global variable local field update, although it is not illustrated. When completing the local variable local field adjustment thereafter, the computing device 220 starts the PNS at time t10. The computing device 220 repeats the same processing as described above thereafter.

In this connection, while the PNS is being performed, coupling coefficients used in the next PNS may be pre-read from the DRAM 210 and stored in the local memory unit 221, as described earlier.

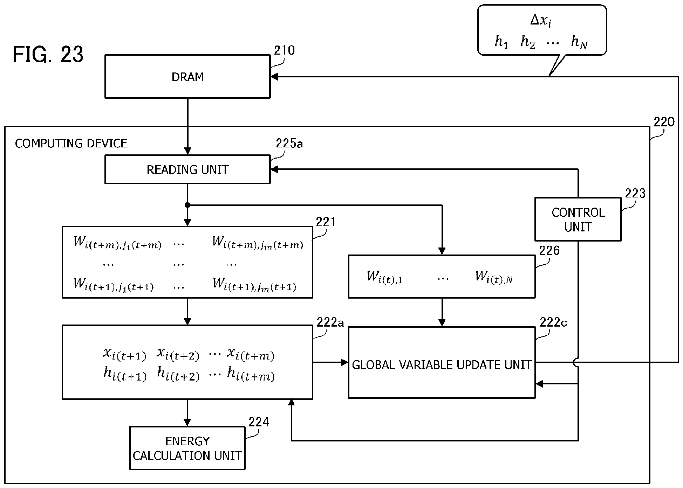

FIG. 23 illustrates a modification example of the computing device.

The global variable storage unit 222b1 of FIG. 11 may be provided in the DRAM 210. In this case, the computing device 220 includes a global variable update unit 222c and a reading unit 225a, in place of the global variable processing unit 222b.

The reading unit 225a has the functions of the coefficient data stream generation unit 225. In addition, the reading unit 225a supplies the values of state variables and local fields to be added to local variables, to the local variable processing unit 222a. At this time, the reading unit 225a also reads the value of the state variable $x_i$ corresponding to a state variable $x_i$* to be excluded from the local variables, from the DRAM 210 and supplies it to the global variable update unit 222c.

The global variable update unit 222c updates the local fields $h_i$ to $h_N$ held in the DRAM 210 on the basis of the coupling coefficients held in the local memory unit 226 according to the difference $\Delta x_i$ between the state variable $x_i$* excluded from the local variables and the state variable $x_i$ read from the DRAM 210. In addition, the global variable update unit 222c updates $x_i$ held in the DRAM 210 on the basis of $\Delta x_i$.

As just described, the computing device 220 may cause the DRAM 210 to hold the global variables. This eliminates the need of a storage space for holding the global variables, i.e., the need of the global variable storage unit 222b1 in the computing device 220.

As described above, the computing device 220 targets all the plurality of state variables in a plurality of trials while changing the trial target set, and in the trials, uses coupling coefficients read from the DRAM 210 and stored in the local memory unit 221. This reduces the frequency of access from the computing device 220 to the DRAM 210. It is therefore possible to prevent a decrease in processing speed due to the access to the DRAM 210. As a result, it is achieved to accelerate solving a large-scale problem in which the total size of coupling coefficients is relatively large. In addition, in the example of the third embodiment, it is possible to reduce the needed memory capacity of the local memory unit 221 to $m^2$, in contrast to the total size of the coupling coefficients being $N^2$. The reduction ratio in the memory capacity is $m^2/N^2$. The third embodiment is able to reduce the memory capacity of the local memory unit 221, as compared with the second embodiment. In addition, the third embodiment is able to reduce the overhead for updating local fields other than those in the local variables to $1/r$, as compared with the second embodiment.

As exemplified in the second and third embodiments, the computing device 220 has the following functions, for example. The computing device 220 finds a solution to a combinatorial optimization problem using an energy function of an Ising model including a plurality of state variables and a plurality of coupling coefficients corresponding to a plurality of pairs of the plurality of state variables. To this end, the computing device 220 includes the local memory unit 221, search unit 222, and control unit 223. The local memory unit 221 stores some of all the coupling coefficients held in the DRAM 210. With respect to a trial target set that includes a plurality of first state variables as trial targets, the control unit 223 reads, from the DRAM 210, a plurality of first coupling coefficients corresponding to a plurality of first pairs of the first state variables belonging to the trial target set, and stores them in the local memory unit 221. The search unit 222 conducts, a plurality of times, a trial on whether to update the value of any first state variable belonging to the trial target set, using the plurality of first coupling coefficients stored in the local memory unit 221. The control unit 223 repeats change of the trial target set and a process of reading the first coupling coefficients from the DRAM 210, storing them in the local memory unit 221, and conducting, a plurality of times, the trial using the first coupling coefficients by the search unit 222, so that all the plurality of state variables are targeted in the trials.

With the above approach, the computing device 220 is able to reduce the frequency of access to the DRAM 210 and thus to accelerate solving a large-scale problem. That is, the computing device 220 uses the plurality of first coupling coefficients stored in the local memory unit 221 in the plurality of trials. Therefore, the number of trials is higher than the number of times of reading coupling coefficients in the local memory unit 221, which results in accelerating solving the large-scale problem. A computing circuit including the search unit 222 and control unit 223, such as an FPGA or GPU, is an example of the processing unit 12 of the first embodiment. The local memory unit 221 is an example of the storage unit 11 of the first embodiment.

In addition, the processing unit 12 may be implemented by a computing circuit such as the CPU 101, for example. The storage unit 11 may be implemented by a cache memory of the CPU 101, for example. In this case, the RAM 102 may be an example of the storage device 20. As described above, each of the processing unit 12 and computing device 220 may be implemented by a coprocessor such as an FPGA or GPU or by a processor such as the CPU 101.

In addition, the indices of the plurality of first state variables belonging to the trial target set may be consecutive or nonconsecutive. Furthermore, the number of differential state variables between previous and current trial target sets may be one or plural. For example, the number of differential state variables between the previous and current trial target sets may be set to four or more. For example, the number of state variables that are not included in the previous trial target set but are included in the current trial target set may be set to two or more.

As exemplified in the second embodiment, the computing device 220 may further include the variable storage unit 222r. The variable storage unit 222r stores the values of the plurality of state variables, and the plurality of local fields corresponding to the plurality of state variables for use in calculating a change in the value of the energy function due to a change in the value of a state variable. The control unit 223 reads, from the DRAM 210, the plurality of second coupling coefficients corresponding to the plurality of second pairs each including one of the plurality of first state variables belonging to the trial target set and one of the plurality of second state variables that do not belong to the trial target set, together with the plurality of first coupling coefficients and stores them in the local memory unit 221. In addition, in the trials described above, the search unit 222 calculates a change in the value of the energy function due to a change in the value of a first state variable belonging to the trial target set, on the basis of the local field corresponding to the first state variable, and updates the value of the first state variable depending on the calculated change. When updating the value of the first state variable, the search unit 222 updates the plurality of first local fields corresponding to the plurality of first state variables belonging to the trial target set among the plurality of local fields stored in the variable storage unit 222r on the basis of the first coupling coefficients associated with the updated first state variable. At this time, the search unit 222 also updates the plurality of second local fields corresponding to the plurality of second state variables that do not belong to the trial target set among the plurality of local fields stored in the variable storage unit 222r on the basis of the second coupling coefficients associated with the updated first state variable.

With the above approach, the computing device 220 is able to reduce the needed memory capacity of the local memory unit 221 to $N*m$, in contrast to the total size of the coupling coefficients being $N^2$.

In addition, as exemplified in the third embodiment, the computing device 220 may further include the local variable storage unit 222a1. The local variable storage unit 222a1 stores the values of the plurality of first state variables belonging to the trial target set, and the plurality of first local fields corresponding to the plurality of first state variables for use in calculating a change in the value of the energy function due to a change in the value of a first state variable. In addition, the computing device 220 is able to access the global variable storage unit 222b1. The global variable storage unit 222b1 stores the values of the plurality of state variables and the plurality of second local fields corresponding to the plurality of state variables. The global variable storage unit 222b1 may be provided in the computing device 220 or outside the computing device 220, for example, in the DRAM 210.

In this case, in changing the trial target set from the previous one to the current one, the control unit 223 extracts, from the plurality of state variables, a first differential state variable that is included in the previous trial target set but is not included in the current trial target set. The control unit 223 then reads a plurality of second coupling coefficients corresponding to a plurality of second pairs each including the first differential state variable and one of the other state variables, together with the plurality of first coupling coefficients from the DRAM 210, and stores the plurality of second coupling coefficients in the local memory unit 226. The search unit 222 updates the second value of the first differential state variable stored in the global variable storage unit 222b1 with the first value of the first differential state variable stored in the local variable storage unit 222a1. At this time, the search unit 222 also updates the plurality of second local fields stored in the global variable storage unit 222b1 on the basis of the difference in the second value between before and after the update and the plurality of second coupling coefficients stored in the local memory unit 226.

In addition, the search unit 222 obtains the third value of a second differential state variable that is not included in the previous trial target set but is included in the current trial target set among the plurality of state variables from the global variable storage unit 222b1 and stores it in the local variable storage unit 222a1. The search unit 222 obtains the differences between the fourth and fifth values of each of the plurality of first state variables respectively stored in the local variable storage unit 222a1 and the global variable storage unit 222b1. The search unit 222 then calculates the local field of the second differential state variable on the basis of the obtained differences, the second local field of the second differential state variable stored in the global variable storage unit 222b1, and the first coupling coefficients stored in the local memory unit 221, and stores it in the local variable storage unit 222a1. The local field of the second differential state variable is calculated from Equation (9) or (10).

Then, in the trials described above, the search unit 222 calculates a change in the value of the energy function due to a change in the value of a first state variable belonging to the current trial target set, on the basis of the first local field corresponding to the first state variable, stored in the local variable storage unit 222a1. The search unit 222 updates the value of the first state variable stored in the local variable storage unit 222a1 depending on the calculated change. When updating the value of the first state variable, the search unit 222 updates the plurality of first local fields stored in the local variable storage unit 222a1 on the basis of the first coupling coefficients associated with the updated first state variable.

Thereby, the computing device 220 is able to reduce the needed memory capacity of the local memory unit 221 to $m^2$, in contrast to the total size of coupling coefficients being $N^2$. In addition, the computing device 220 is able to reduce the overhead for updating local fields other than those in the local variables. For example, the search unit 222 may include the local variable processing unit 222a and global variable processing unit 222b, or may include the local variable processing unit 222a and global variable update unit 222c. In this connection, the local memory units 221 and 226 are examples of the storage unit 11 of the first embodiment.

The search unit 222 may update the plurality of second local fields stored in the global variable storage unit 222b1 and conducts trials on the current trial target set in parallel. For example, the search unit 222 updates the second local field corresponding to the second differential state variable, stored in the global variable storage unit 222b1, using the difference in the value of the first differential state variable. Then, using the updated second local field of the second differential state variable and the information held in the local variable storage unit 222a1, the search unit 222 generates a new local field for the second differential state variable from Equation (9) or (10), stores it in the local variable storage unit 222a1, and starts the trials described above. In parallel to the trials, the search unit 222 is able to update the other second local fields held in the global variable storage unit 222b1. This accelerates problem solving.

When reading the plurality of second coupling coefficients from the DRAM 210, the control unit 223 may omit reading the coupling coefficients corresponding to pairs each including the first differential state variable and one of the other state variables belonging to the previous trial target set. This reduces the memory bandwidth for reading from the DRAM 210.

The control unit 223 may read the coupling coefficients associated with a differential state variable between the previous and current trial target sets from the DRAM 210. In addition, the control unit 223 may omit reading, from the DRAM 210, the coupling coefficients associated with a state variable overlapping between the previous and current target sets, i.e., the coupling coefficients previously read from the DRAM 210. This streamlines the reading from the DRAM 210 and accelerates problem solving. The differential state variable between the previous and current trial target sets is a state variable that is not included in the previous trial target set but is included in the current trial target set.

The control unit 223 may pre-read the coupling coefficients associated with the state variables of the next trial target set from the DRAM 210 while conducting trials on the current trial target set. This streamlines the reading from the DRAM 210 and thus accelerates problem solving.

The search unit 222 may perform the serial selection MCMC method in the above-described trials. That is, the search unit 222 selects the plurality of first state variables belonging to the trial target set one by one, at random or in a predetermined order, determines based on the energy function whether to update the value of the selected first state variable, and when determining to update the value, updates the value of the first state variable. Alternatively, the search unit 222 may perform the rejection-free MCMC method. More specifically, the search unit 222 may determine based on the energy function whether to accept the update of the value of each of the plurality of first state variables belonging to the trial target set in parallel and update the value of any first state variable for which the value update is accepted. Yet alternatively, the search unit 222 may perform the PNS RF method. More specifically, the search unit 222 may determine based on the energy function whether to accept value update, across a predetermined number of first state variables selected from the plurality of first state variables in parallel, and update the value of any first state variable for which the value update is accepted. This streamlines the problem solving. Especially, the use of the PNS RF method enables adjusting the probability of trying the same state variable in a row to a predetermined value.

In this connection, the information processing of the first embodiment may be implemented by the processing unit 12 executing programs. In addition, the information processing of the second and third embodiments is implemented by the CPU 101 executing programs. Such programs may be recorded on the computer-readable storage medium 113.

For example, storage media 113 on which the programs are recorded are distributed, so that the programs are distributed. In addition, the programs may be stored in another computer, which then distributes the programs over a network. For example, a computer stores (installs) the programs recorded on the storage medium 113 or programs received from the other computer in a local storage device such as the RAM 102 or HDD 103, and reads the programs from the storage device and runs the programs.

According to one aspect, it is achieved to accelerate solving a large-scale problem.

## Claims

1. An information processing apparatus (10) for finding a solution to a combinatorial optimization problem using an energy function of an Ising model, the information processing apparatus (10) comprising:

   first storage means (11); and
   processing means (12), wherein:

   the first storage means (11) is configured to store some of a plurality of coupling coefficients, the plurality of coupling coefficients corresponding to a plurality of pairs of a plurality of state variables included in the energy function, the plurality of coupling coefficients being stored in a storage device (20);
   the processing means (12) is configured to perform a process of

   reading, with respect to a trial target set including a plurality of first state variables among the plurality of state variables as targets for a trial on whether to perform value update, a plurality of first coupling coefficients corresponding to a plurality of first pairs of the plurality of first state variables belonging to the trial target set from the storage device (20), and storing the plurality of first coupling coefficients in the first storage means (11), and
   conducting, a plurality of times, the trial on whether to update a value of any of the plurality of first state variables belonging to the trial target set, using the plurality of first coupling coefficients stored in the first storage means (11),

   the processing means (12) is further configured to repeat change of the trial target set and the process, so as to target all the plurality of state variables in the trial,
   the information processing apparatus further comprising third storage means configured to store values of the plurality of first state variables and a plurality of first local fields corresponding to the plurality of first state variables, the plurality of first local fields being used in calculating a change in a value of the energy function due to a change in a value of one of the plurality of first state variables, wherein:

   the processing means (12) is able to access fourth storage means, the fourth storage means storing values of the plurality of state variables and a plurality of second local fields corresponding to the plurality of state variables;
   **characterised in that** the change of the trial target set includes

   reading, from the storage device (20), a plurality of second coupling coefficients corresponding to a plurality of second pairs each including a first differential state variable that is included in a previous trial target set but is not included in a current trial target set among the plurality of state variables and one of a plurality of other state variables, together with the plurality of first coupling coefficients, and storing the plurality of second coupling coefficients, as well as the plurality of first coupling coefficients in the first storage means (11),

updating a second value of the first differential state variable stored in the fourth storage means with a first value of the first differential state variable stored in the third storage means, and updating the plurality of second local fields stored in the fourth storage means, based on a difference in the second value between before and after the updating of the second value and the plurality of second coupling coefficients, and

obtaining, from the fourth storage means, a third value of a second differential state variable that is not included in the previous trial target set but is included in the current trial target set among the plurality of state variables, storing the third value in the third storage means, calculating a local field corresponding to the second differential state variable, based on differences between fourth and fifth values of each of the plurality of first state variables respectively stored in the third storage means and the fourth storage means, the second local field of the second differential state variable stored in the fourth storage means, and the plurality of first coupling coefficients stored in the first storage means (11), and storing the calculated local field in the third storage means; and

the trial includes

calculating a change in the value of the energy function due to a change in a value of a first state variable belonging to the current trial target set, based on a first local field corresponding to the first state variable among the plurality of first local fields stored in the third storage means,

updating the value of the first state variable stored in the third storage means depending on the calculated change, and

updating, upon updating the value of the first state variable, the plurality of first local fields stored in the third storage means, based on the first coupling coefficients associated with the updated first state variable.

2. The information processing apparatus (10) according to claim 1, wherein the processing means (12) is further configured to perform the updating of the plurality of second local fields stored in the fourth storage means and the trial on the current trial target set in parallel.

3. The information processing apparatus (10) according to claim 1 or 2, wherein in reading the plurality of second coupling coefficients from the storage device (20), the processing means (12) is further configured to omit reading coupling coefficients corresponding to pairs each including the first differential state variable and one of other state variables belonging to the previous trial target set.

4. The information processing apparatus (10) according to any one of claims 1 to 3, wherein the processing means (12) is further configured to read coupling coefficients associated with a differential state variable between a previous trial target set and a current trial target set from the storage device (20), and to omit reading coupling coefficients associated with a state variable overlapping between the previous trial target set and the current trial target set from the storage device (20),

wherein the differential state variable is a variable that is included in a previous trial target set but is not included in a current trial target set.

5. The information processing apparatus (10) according to any one of claims 1 to 4, wherein the processing means (12) is further configured to pre-read, from the storage device (20), coupling coefficients associated with a state variable belonging to a next trial target set while conducting the trial on a current trial target set.

6. The information processing apparatus (10) according to any one of claims 1 to 5, wherein indices of the plurality of first state variables belonging to the trial target set are consecutive or nonconsecutive.

7. The information processing apparatus (10) according to any one of claims 1 to 6, wherein there are a plurality of differential state variables between a previous trial target set and a current trial target set, wherein the plurality of differential state variables is a plurality of variables that are included in a previous trial target set but are not included in a current trial target set.

8. The information processing apparatus (10) according to any one of claims 1 to 7, wherein the processing means (12) is further configured to conduct

the trial in a first manner or a second manner, wherein

the first manner includes selecting the plurality of first state variables one by one, at random or in a predetermined order, determining based on the energy function whether to update a value of the selected first state variable, and upon determining to update the value of the selected first state variable, updating the value of the selected first state variable, and

the second manner includes determining, in parallel, whether to accept the value update across all the plurality of first state variables or a predetermined number of first state variables selected from the plurality of first state variables, and updating a value of one of the first state variables for which the value update is accepted.

9. An information processing method executed by an information processing apparatus (10) for finding a solution to a combinatorial optimization problem using an energy function of an Ising model, the information processing method comprising:

performing a process of

reading, with respect to a trial target set including a plurality of first state variables among a plurality of state variables included in the energy function as targets for a trial on whether to perform value update, a plurality of first coupling coefficients corresponding to a plurality of first pairs of the plurality of first state variables belonging to the trial target set from a storage device (20), and storing the plurality of first coupling coefficients in first storage means (11), the storage device (20) storing a plurality of coupling coefficients corresponding to a plurality of pairs of the plurality of state variables, the first storage means (11) being configured to store some of the plurality of coupling coefficients, and

conducting, a plurality of times, the trial on whether to update a value of any of the plurality of first state variables belonging to the trial target set, using the plurality of first coupling coefficients stored in the first storage means (11); and

repeating change of the trial target set and the process, so as to target all the plurality of state variables in the trial, the information processing method further comprising:

storing values of the plurality of first state variables and a plurality of first local fields corresponding to the plurality of first state variables in third storage means, the plurality of first local fields being used in calculating a change in a value of the energy function due to a change in a value of one of the plurality of first state variables, and

accessing fourth storage means, the fourth storage means storing values of the plurality of state variables and a plurality of second local fields corresponding to the plurality of state variables;

**characterised by**

the change of the trial target set including

reading, from the storage device (20), a plurality of second coupling coefficients corresponding to a plurality of second pairs each including a first differential state variable that is included in a previous trial target set but is not included in a current trial target set among the plurality of state variables and one of a plurality of other state variables, together with the plurality of first coupling coefficients, and storing the plurality of second coupling coefficients, as well as the plurality of first coupling coefficients in the first storage means (11),

updating a second value of the first differential state variable stored in the fourth storage means with a first value of the first differential state variable stored in the third storage means, and updating the plurality of second local fields stored in the fourth storage means, based on a difference in the second value between before and after the updating of the second value and the plurality of second coupling coefficients, and

obtaining, from the fourth storage means, a third value of a second differential state variable that is not included in the previous trial target set but is included in the current trial target set among the plurality of state variables, storing the third value in the third storage means, calculating a local field corresponding to the second differential state variable, based on differences between fourth and fifth values of each of the plurality of first state variables respectively stored in the third storage means and the fourth storage means, the second local field of the second differential state variable stored in the fourth storage means, and the plurality of first coupling coefficients stored in the first storage means (11), and storing the calculated local field in the third storage means; and

the trial includes

calculating a change in the value of the energy function due to a change in a value of a first state variable belonging to the current trial target set, based on a first local field corresponding to the first state variable among the plurality of first local fields stored in the third storage means, updating the value of the first state variable stored in the third storage means depending on the calculated change, and

updating, upon updating the value of the first state variable, the plurality of first local fields stored in the third storage means, based on the first coupling coefficients associated with the updated first state variable.

10. A computer program that causes a computer to perform a procedure for finding a solution to a combinatorial optimization problem using an energy function of an Ising model, the procedure comprising:

performing a process of

reading, with respect to a trial target set including a plurality of first state variables among a plurality of state variables included in the energy function as targets for a trial on whether to perform value update, a plurality of first coupling coefficients corresponding to a plurality of first pairs of the plurality of first state variables belonging to the trial target set from a storage device (20), and storing the plurality of first coupling coefficients in first storage means (11), the storage device (20) storing a plurality of coupling coefficients corresponding to a plurality of pairs of the plurality of state variables, the first storage means (11) being configured to store some of the plurality of coupling coefficients, and
conducting, a plurality of times, the trial on whether to update a value of any of the plurality of first state variables belonging to the trial target set, using the plurality of first coupling coefficients stored in the first storage means (11); and

repeating change of the trial target set and the process, so as to target all the plurality of state variables in the trial, the procedure further comprising:

storing values of the plurality of first state variables and a plurality of first local fields corresponding to the plurality of first state variables in third storage means, the plurality of first local fields being used in calculating a change in a value of the energy function due to a change in a value of one of the plurality of first state variables, and
accessing fourth storage means, the fourth storage means storing values of the plurality of state variables and a plurality of second local fields corresponding to the plurality of state variables;
**characterised by**
the change of the trial target set including

reading, from the storage device (20), a plurality of second coupling coefficients corresponding to a plurality of second pairs each including a first differential state variable that is included in a previous trial target set but is not included in a current trial target set among the plurality of state variables and one of a plurality of other state variables, together with the plurality of first coupling coefficients, and storing the plurality of second coupling coefficients, as well as the plurality of first coupling coefficients in the first storage means (11),
updating a second value of the first differential state variable stored in the fourth storage means with a first value of the first differential state variable stored in the third storage means, and updating the plurality of second local fields stored in the fourth storage means, based on a difference in the second value between before and after the updating of the second value and the plurality of second coupling coefficients, and
obtaining, from the fourth storage means, a third value of a second differential state variable that is not included in the previous trial target set but is included in the current trial target set among the plurality of state variables, storing the third value in the third storage means, calculating a local field corresponding to the second differential state variable, based on differences between fourth and fifth values of each of the plurality of first state variables respectively stored in the third storage means and the fourth storage means, the second local field of the second differential state variable stored in the fourth storage means, and the plurality of first coupling coefficients stored in the first storage means (11), and storing the calculated local field in the third storage means; and

the trial includes

calculating a change in the value of the energy function due to a change in a value of a first state variable belonging to the current trial target set, based on a first local field corresponding to the first state variable among the plurality of first local fields stored in the third storage means,
updating the value of the first state variable stored in the third storage means depending on the calculated change, and

updating, upon updating the value of the first state variable, the plurality of first local fields stored in the third storage means, based on the first coupling coefficients associated with the updated first state variable.

## Patentansprüche

1. Informationsverarbeitungseinrichtung (10) zum Finden einer Lösung für ein kombinatorisches Optimierungsproblem unter Verwendung einer Energiefunktion eines Ising-Modells, wobei die Informationsverarbeitungseinrichtung (10) Folgendes umfasst:

erste Speichermittel (11); und
Verarbeitungsmittel (12), wobei:

das erste Speichermittel (11) ausgebildet ist, einige von einer Vielzahl von Kopplungskoeffizienten zu speichern, wobei die Vielzahl von Kopplungskoeffizienten einer Vielzahl von Paaren einer Vielzahl von in der Energiefunktion enthaltenen Zustandsvariablen entspricht, wobei die Vielzahl von Kopplungskoeffizienten in einer Speichervorrichtung (20) gespeichert wird;
das Verarbeitungsmittel (12) ausgebildet ist, einen Prozess des Lesens durchzuführen, in Bezug auf eine Versuchszielmenge, die eine Vielzahl von ersten Zustandsvariablen unter der Vielzahl von Zustandsvariablen als Ziele für einen Versuch, ob eine Wertaktualisierung durchgeführt wird, einschließt, einer Vielzahl von ersten Kopplungskoeffizienten, die einer Vielzahl von ersten Paaren der Vielzahl von ersten Zustandsvariablen entsprechen, die zu der Versuchszielmenge gehören, aus der Speichervorrichtung (20), und Speichern der Vielzahl von ersten Kopplungskoeffizienten im ersten Speichermittel (11), und
Durchführens, eine Vielzahl von Malen, des Versuchs, ob ein Wert irgendeiner der Vielzahl von ersten Zustandsvariablen, die zu der Versuchszielmenge gehören, zu aktualisieren ist, unter Verwendung der Vielzahl von ersten Kopplungskoeffizienten, die im ersten Speichermittel (11) gespeichert sind,
wobei das Verarbeitungsmittel (12) weiter ausgebildet ist, eine Änderung der Versuchszielmenge und den Prozess zu wiederholen, sodass alle die Vielzahl von Zustandsvariablen in dem Versuch als Ziele für den Versuch vorgesehen sind,
wobei die Informationsverarbeitungseinrichtung weiter ein drittes Speichermittel umfasst, das ausgebildet ist, Werte der Vielzahl von ersten Zustandsvariablen und eine Vielzahl von ersten lokalen Feldern, die der Vielzahl von ersten Zustandsvariablen entsprechen, zu speichern, wobei die Vielzahl von ersten lokalen Feldern beim Berechnen einer Änderung eines Werts der Energiefunktion aufgrund einer Änderung eines Werts einer der Vielzahl von ersten Zustandsvariablen verwendet wird, wobei:

das Verarbeitungsmittel (12) in der Lage ist, auf ein viertes Speichermittel zuzugreifen, wobei das vierte Speichermittel Werte der Vielzahl von Zustandsvariablen und eine Vielzahl von zweiten lokalen Feldern speichert, die der Vielzahl von Zustandsvariablen entsprechen;
**dadurch gekennzeichnet, dass**
die Änderung der Versuchszielmenge Folgendes einschließt:

Lesen, aus der Speichervorrichtung (20), einer Vielzahl von zweiten Kopplungskoeffizienten, die einer Vielzahl von zweiten Paaren entsprechen, die jeweils eine erste Differenzzustandsvariable einschließen, die in einer vorherigen Versuchszielmenge enthalten ist, aber in einer aktuellen Versuchszielmenge unter der Vielzahl von Zustandsvariablen nicht enthalten ist, und eine von einer Vielzahl von anderen Zustandsvariablen, zusammen mit der Vielzahl von ersten Kopplungskoeffizienten, und Speichern der Vielzahl von zweiten Kopplungskoeffizienten sowie der Vielzahl von ersten Kopplungskoeffizienten im ersten Speichermittel (11),

Aktualisieren eines zweiten Werts der ersten Differenzzustandsvariable, die im vierten Speichermittel gespeichert ist, mit einem ersten Wert der ersten Differenzzustandsvariable, der im dritten Speichermittel gespeichert ist, und Aktualisieren der Vielzahl von zweiten lokalen Feldern, die im vierten Speichermittel gespeichert sind, basierend auf einer Differenz des zweiten Werts zwischen vor und nach dem Aktualisieren des zweiten Werts und der Vielzahl von zweiten Kopplungskoeffizienten, und

Erhalten, vom vierten Speichermittel, eines dritten Werts einer zweiten Differenzzustandsvariable, die in der vorherigen Versuchszielmenge nicht enthalten ist, aber in der aktuellen Versuchszielmenge unter der Vielzahl von Zustandsvariablen enthalten ist, Speichern des dritten Werts im dritten Speichermittel, Berechnen eines lokalen Felds, das der zweiten Differenzzustandsvariable entspricht, basierend auf Differenzen zwischen vierten und fünften Werten jeder der Vielzahl von ersten Zustandsvariablen, die jeweils im dritten Speichermittel bzw. im vierten Speichermittel gespeichert sind, dem zweiten lokalen Feld der zweiten Differenzzustandsvariable, das im vierten Speichermittel gespeichert ist, und der Vielzahl von ersten Kopplungskoeffizienten, die im ersten Speichermittel (11) gespeichert sind, und Speichern des berechneten lokalen Felds im dritten Speichermittel; und

der Versuch Folgendes einschließt:

Berechnen einer Änderung des Werts der Energiefunktion aufgrund einer Änderung eines Werts einer ersten Zustandsvariable, die zu der aktuellen Versuchszielmenge gehört, basierend auf einem ersten lokalen Feld, das der ersten Zustandsvariable unter der Vielzahl von ersten lokalen Feldern entspricht, die im dritten Speichermittel gespeichert sind,

Aktualisieren des Werts der ersten Zustandsvariable, der im dritten Speichermittel gespeichert ist, abhängig von der berechneten Änderung, und

Aktualisieren, bei Aktualisieren des Werts der ersten Zustandsvariable, der Vielzahl von ersten lokalen Feldern, die im dritten Speichermittel gespeichert sind, basierend auf den ersten Kopplungskoeffizienten, die der aktualisierten ersten Zustandsvariable zugeordnet sind.

2. Informationsverarbeitungseinrichtung (10) nach Anspruch 1, wobei das Verarbeitungsmittel (12) weiter ausgebildet ist, das Aktualisieren der Vielzahl von zweiten lokalen Feldern, die im vierten Speichermittel gespeichert sind, und den Versuch an der aktuellen Versuchszielmenge parallel auszuführen.

3. Informationsverarbeitungseinrichtung (10) nach Anspruch 1 oder 2, wobei beim Lesen der Vielzahl von zweiten Kopplungskoeffizienten aus der Speichervorrichtung (20) das Verarbeitungsmittel (12) weiter ausgebildet ist, das Lesen von Kopplungskoeffizienten, die Paaren entsprechen, die jeweils die erste Differenzzustandsvariable und eine der anderen Zustandsvariablen, die zu der vorherigen Versuchszielmenge gehören, einschließen, wegzulassen.

4. Informationsverarbeitungseinrichtung (10) nach einem der Ansprüche 1 bis 3, wobei das Verarbeitungsmittel (12) weiter ausgebildet ist, Kopplungskoeffizienten, die einer Differenzzustandsvariable zwischen einer vorherigen Versuchszielmenge und einer aktuellen Versuchszielmenge zugeordnet sind, aus der Speichervorrichtung (20) zu lesen, und das Lesen von Kopplungskoeffizienten, die einer zwischen der vorherigen Versuchszielmenge und der aktuellen Versuchszielmenge überlappenden Zustandsvariable zugeordnet sind, aus der Speichervorrichtung (20) wegzulassen, wobei die Differenzzustandsvariable eine Variable ist, die in einer vorherigen Versuchszielmenge enthalten ist, aber in einer aktuellen Versuchszielmenge nicht enthalten ist.

5. Informationsverarbeitungseinrichtung (10) nach einem der Ansprüche 1 bis 4, wobei das Verarbeitungsmittel (12) weiter ausgebildet ist, aus der Speichervorrichtung (20) Kopplungskoeffizienten, die einer Zustandsvariable zugeordnet sind, die zu einer nächsten Versuchszielmenge gehört, vorab zu lesen, während der Versuch an einer aktuellen Versuchszielmenge durchgeführt wird.

6. Informationsverarbeitungseinrichtung (10) nach einem der Ansprüche 1 bis 5, wobei Indizes der Vielzahl von ersten Zustandsvariablen, die zu der Versuchszielmenge gehören, aufeinanderfolgend oder nicht aufeinanderfolgend sind.

7. Informationsverarbeitungseinrichtung (10) nach einem der Ansprüche 1 bis 6, wobei es eine Vielzahl von Differenzzustandsvariablen zwischen einer vorherigen Versuchszielmenge und einer aktuellen Versuchszielmenge gibt, wobei die Vielzahl von Differenzzustandsvariablen eine Vielzahl von Variablen ist, die in einer vorherigen Versuchszielmenge enthalten sind, aber in einer aktuellen Versuchszielmenge nicht enthalten sind.

8. Informationsverarbeitungseinrichtung (10) nach einem der Ansprüche 1 bis 7, wobei das Verarbeitungsmittel (12) weiter ausgebildet ist, zum Durchführen,

des Versuchs in einer ersten Art oder einer zweiten Art,
wobei

die erste Art das Auswählen der Vielzahl von ersten Zustandsvariablen eine nach der anderen, zufällig oder in einer vorbestimmten Reihenfolge, das Bestimmen, basierend auf der Energiefunktion, ob ein Wert der ausgewählten ersten Zustandsvariable zu aktualisieren ist, und bei Bestimmen, den Wert der ausgewählten ersten Zustandsvariable zu aktualisieren, das Aktualisieren des Werts der ausgewählten ersten Zustandsvariable, einschließt, und

die zweite Art das Bestimmen, parallel, ob die Wertaktualisierung über alle die Vielzahl von ersten Zustandsvariablen oder eine vorbestimmte Anzahl von ersten Zustandsvariablen, die aus der Vielzahl von ersten Zustandsvariablen ausgewählt sind, zu akzeptieren ist, und das Aktualisieren eines Werts einer der ersten Zustandsvariablen, für die die Wertaktualisierung akzeptiert wird, einschließt.

**9.** Informationsverarbeitungsverfahren, ausgeführt durch eine Informationsverarbeitungseinrichtung (10) zum Finden einer Lösung für ein kombinatorisches Optimierungsproblem unter Verwendung einer Energiefunktion eines Ising-Modells, wobei das Informationsverarbeitungsverfahren umfasst:

Ausführen eines Prozesses des

Lesens, in Bezug auf eine Versuchszielmenge, die eine Vielzahl von ersten Zustandsvariablen unter einer Vielzahl von in der Energiefunktion enthaltenen Zustandsvariablen als Ziele für einen Versuch, ob eine Wertaktualisierung durchgeführt wird, einschließt, einer Vielzahl von ersten Kopplungskoeffizienten, die einer Vielzahl von ersten Paaren der Vielzahl von ersten Zustandsvariablen entsprechen, die zu der Versuchszielmenge gehören, aus einer Speichervorrichtung (20), und Speichern der Vielzahl von ersten Kopplungskoeffizienten im ersten Speichermittel (11), wobei die Speichervorrichtung (20) eine Vielzahl von Kopplungskoeffizienten speichert, die einer Vielzahl von Paaren der Vielzahl von Zustandsvariablen entsprechen, wobei das erste Speichermittel (11) ausgebildet ist, einige von der Vielzahl von Kopplungskoeffizienten zu speichern, und Durchführen, eine Vielzahl von Malen, des Versuchs, ob ein Wert irgendeiner der Vielzahl von ersten Zustandsvariablen, die zu der Versuchszielmenge gehören, zu aktualisieren ist, unter Verwendung der Vielzahl von ersten Kopplungskoeffizienten, die im ersten Speichermittel (11) gespeichert sind; und

Wiederholen einer Änderung der Versuchszielmenge und des Prozesses, um alle die Vielzahl von Zustandsvariablen in dem Versuch als Ziele für den Versuch vorzusehen,
wobei das Informationsverarbeitungsverfahren weiter umfasst:

Speichern von Werten der Vielzahl von ersten Zustandsvariablen und einer Vielzahl von ersten lokalen Feldern, die der Vielzahl von ersten Zustandsvariablen entsprechen, im dritten Speichermittel, wobei die Vielzahl von ersten lokalen Feldern beim Berechnen einer Änderung eines Werts der Energiefunktion aufgrund einer Änderung eines Werts einer der Vielzahl von ersten Zustandsvariablen verwendet wird, und Zugreifen auf ein viertes Speichermittel, wobei das vierte Speichermittel Werte der Vielzahl von Zustandsvariablen und eine Vielzahl von zweiten lokalen Feldern speichert, die der Vielzahl von Zustandsvariablen entsprechen;

**gekennzeichnet durch**

die Änderung der Versuchszielmenge einschließlichn Lesen, aus der Speichervorrichtung (20), einer Vielzahl von zweiten Kopplungskoeffizienten, die einer Vielzahl von zweiten Paaren entsprechen, die jeweils eine erste Differenzzustandsvariable einschließen, die in einer vorherigen Versuchszielmenge enthalten ist, aber in einer aktuellen Versuchszielmenge unter der Vielzahl von Zustandsvariablen nicht enthalten ist, und eine von einer Vielzahl von anderen Zustandsvariablen, zusammen mit der Vielzahl von ersten Kopplungskoeffizienten, und Speichern der Vielzahl von zweiten Kopplungskoeffizienten sowie der Vielzahl von ersten Kopplungskoeffizienten im ersten Speichermittel (11),

Aktualisieren eines zweiten Werts der ersten Differenzzustandsvariable, die im vierten Speichermittel gespeichert ist, mit einem ersten Wert der ersten Differenzzustandsvariable, der im dritten Speichermittel gespeichert ist, und Aktualisieren der Vielzahl von zweiten lokalen Feldern, die im vierten Speichermittel gespeichert sind, basierend auf einer Differenz des zweiten Werts zwischen vor und nach dem Aktualisieren des zweiten Werts und der Vielzahl von zweiten Kopplungskoeffizienten, und

Erhalten, vom vierten Speichermittel, eines dritten Werts einer zweiten Differenzzustandsvariable, die in der vorherigen Versuchszielmenge nicht enthalten ist, aber in der aktuellen Versuchszielmenge unter der Vielzahl von Zustandsvariablen enthalten ist, Speichern des dritten Werts im dritten Speichermittel, Berechnen eines lokalen Felds, das der zweiten Differenzzustandsvariable entspricht, basierend auf Differenzen zwischen vierten und fünften Werten jeder der Vielzahl von ersten Zustandsvariablen, die jeweils im dritten Speichermittel bzw. im vierten Speichermittel gespeichert sind, dem zweiten lokalen Feld der zweiten Differenzzustandsvariable, das im vierten Speichermittel gespeichert ist, und der Vielzahl von ersten Kopplungskoeffizienten, die im ersten Speichermittel (11) gespeichert sind, und Speichern des berechneten lokalen Felds im dritten Speichermittel; und der Versuch einschließt

Berechnen einer Änderung des Werts der Energiefunktion aufgrund einer Änderung eines Werts einer ersten Zustandsvariable, die zu der aktuellen Versuchszielmenge gehört, basierend auf einem ersten lokalen Feld, das der ersten Zustandsvariable unter der Vielzahl von ersten lokalen Feldern entspricht, die im dritten Speichermittel gespeichert sind,

Aktualisieren des Werts der ersten Zustandsvariable, der im dritten Speichermittel gespeichert ist, abhängig von der berechneten Änderung, und

Aktualisieren, bei Aktualisieren des Werts der ersten Zustandsvariable, der Vielzahl von ersten lokalen Feldern, die im dritten Speichermittel gespeichert sind, basierend auf den ersten Kopplungskoeffizienten, die der aktualisierten ersten Zustandsvariable zugeordnet sind.

10. Computerprogramm, das einen Computer veranlasst, ein Verfahren zum Finden einer Lösung für ein kombinatorisches Optimierungsproblem unter Verwendung einer Energiefunktion eines Ising-Modells auszuführen, wobei das Verfahren umfasst:

Ausführen eines Prozesses des

Lesens, in Bezug auf eine Versuchszielmenge, die eine Vielzahl von ersten Zustandsvariablen unter einer Vielzahl von in der Energiefunktion enthaltenen Zustandsvariablen als Ziele für einen Versuch, ob eine Wertaktualisierung durchgeführt wird, einschließt, einer Vielzahl von ersten Kopplungskoeffizienten, die einer Vielzahl von ersten Paaren der Vielzahl von ersten Zustandsvariablen entsprechen, die zu der Versuchszielmenge gehören, aus einer Speichervorrichtung (20), und Speichern der Vielzahl von ersten Kopplungskoeffizienten im ersten Speichermittel (11), wobei die Speichervorrichtung (20) eine Vielzahl von Kopplungskoeffizienten speichert, die einer Vielzahl von Paaren der Vielzahl von Zustandsvariablen entsprechen, wobei das erste Speichermittel (11) ausgebildet ist, einige von der Vielzahl von Kopplungskoeffizienten zu speichern, und

Durchführen, eine Vielzahl von Malen, des Versuchs, ob ein Wert irgendeiner der Vielzahl von ersten Zustandsvariablen, die zu der Versuchszielmenge gehören, zu aktualisieren ist, unter Verwendung der Vielzahl von ersten Kopplungskoeffizienten, die im ersten Speichermittel (11) gespeichert sind; und

Wiederholen einer Änderung der Versuchszielmenge und des Prozesses, um alle die Vielzahl von Zustandsvariablen in dem Versuch als Ziele für den Versuch vorzusehen,

wobei das Verfahren weiter Folgendes umfasst:

Speichern von Werten der Vielzahl von ersten Zustandsvariablen und einer Vielzahl von ersten lokalen Feldern, die der Vielzahl von ersten Zustandsvariablen entsprechen, im dritten Speichermittel, wobei die Vielzahl von ersten lokalen Feldern beim Berechnen einer Änderung eines Werts der Energiefunktion aufgrund einer Änderung eines Werts einer der Vielzahl von ersten Zustandsvariablen verwendet wird, und

Zugreifen auf ein viertes Speichermittel, wobei das vierte Speichermittel Werte der Vielzahl von Zustandsvariablen und eine Vielzahl von zweiten lokalen Feldern speichert, die der Vielzahl von Zustandsvariablen entsprechen;

**gekennzeichnet durch**

die Änderung der Versuchszielmenge einschließlich Lesen, aus der Speichervorrichtung (20), einer Vielzahl von zweiten Kopplungskoeffizienten, die einer Vielzahl von zweiten Paaren entsprechen, die jeweils eine erste Differenzzustandsvariable einschließen, die in einer vorherigen Versuchszielmenge enthalten ist, aber in einer aktuellen Versuchszielmenge unter der Vielzahl von Zustandsvariablen nicht enthalten ist, und eine von einer Vielzahl von anderen Zustandsvariablen, zusammen mit der Vielzahl von ersten Kopplungskoeffizienten, und Speichern der Vielzahl von zweiten Kopplungskoeffizienten sowie der Vielzahl von ersten Kopplungskoeffizienten im ersten Speichermittel (11),

Aktualisieren eines zweiten Werts der ersten Differenzzustandsvariable, die im vierten Speichermittel gespeichert ist, mit einem ersten Wert der ersten Differenzzustandsvariable, der im dritten Speichermittel gespeichert ist, und Aktualisieren der Vielzahl von zweiten lokalen Feldern, die im vierten Speichermittel gespeichert sind, basierend auf einer Differenz des zweiten Werts zwischen vor und nach dem Aktualisieren des zweiten Werts und der Vielzahl von zweiten Kopplungskoeffizienten, und

Erhalten, vom vierten Speichermittel, eines dritten Werts einer zweiten Differenzzustandsvariable, die in der vorherigen Versuchszielmenge nicht enthalten ist, aber in der aktuellen Versuchszielmenge unter der Vielzahl von Zustandsvariablen enthalten ist, Speichern des dritten Werts im dritten Speichermittel, Berechnen eines lokalen Felds, das der zweiten Differenzzustandsvariable entspricht, basierend auf Differenzen zwischen vierten und fünften Werten jeder der Vielzahl von ersten Zustandsvariablen, die jeweils im dritten Speichermittel bzw. im vierten Speichermittel gespeichert sind, dem zweiten lokalen Feld der zweiten Differenzzustandsvariable, das im vierten Speichermittel gespeichert ist, und der Vielzahl von ersten Kopplungskoeffizienten, die im ersten Speichermittel (11) gespeichert sind, und Speichern des berechneten lokalen Felds im dritten Speichermittel; und der Versuch einschließt

Berechnen einer Änderung des Werts der Energiefunktion aufgrund einer Änderung eines Werts einer ersten Zustandsvariable, die zu der aktuellen Versuchszielmenge gehört, basierend auf einem ersten lokalen Feld, das der ersten Zustandsvariable unter der Vielzahl von ersten lokalen Feldern entspricht, die im dritten Speichermittel gespeichert sind,

Aktualisieren des Werts der ersten Zustandsvariable, der im dritten Speichermittel gespeichert ist, abhängig von der berechneten Änderung, und Aktualisieren, bei Aktualisieren des Werts der ersten Zustandsvariable, der Vielzahl von ersten lokalen Feldern, die im dritten Speichermittel gespeichert sind, basierend auf den ersten Kopplungskoeffizienten, die der aktualisierten ersten Zustandsvariable zugeordnet sind.

## Revendications

1. Appareil de traitement d'informations (10) pour trouver une solution à un problème d'optimisation combinatoire en utilisant une fonction d'énergie d'un modèle d'Ising, l'appareil de traitement d'informations (10) comprenant :

   des premiers moyens de stockage (11) ; et
   des moyens de traitement (12), dans lequel :

   les premiers moyens de stockage (11) sont configurés pour stocker une partie d'une pluralité de coefficients de couplage, la pluralité de coefficients de couplage correspondant à une pluralité de paires d'une pluralité de variables d'état incluses dans la fonction d'énergie, la pluralité de coefficients de couplage étant stockée dans un dispositif de stockage (20) ;
   les moyens de traitement (12) sont configurés pour mettre en œuvre un procédé consistant à

   lire, par rapport à un ensemble cible d'essai incluant une pluralité de premières variables d'état parmi la pluralité de variables d'état en tant que cibles pour un essai visant à déterminer s'il y a lieu d'effectuer une mise à jour de valeur, une pluralité de premiers coefficients de couplage correspondant à une pluralité de premières paires de la pluralité de premières variables d'état appartenant à l'ensemble cible d'essai à partir du dispositif de stockage (20), et stocker la pluralité de premiers coefficients de couplage dans les premiers moyens de stockage (11), et
   réaliser, une pluralité de fois, l'essai visant à déterminer s'il y a lieu de mettre à jour une valeur d'une variable d'état quelconque parmi la pluralité de premières variables d'état appartenant à l'ensemble cible d'essai, en utilisant la pluralité de premiers coefficients de couplage stockés dans les premiers moyens de stockage (11),

   les moyens de traitement (12) sont en outre configurés pour répéter une modification de l'ensemble cible d'essai et le procédé, de manière à cibler l'ensemble de la pluralité de variables d'état dans l'essai,
   l'appareil de traitement d'informations comprenant en outre des troisièmes moyens de stockage configurés pour stocker des valeurs de la pluralité de premières variables d'état et une pluralité de premiers champs locaux correspondant à la pluralité de premières variables d'état, la pluralité de premiers champs locaux étant utilisée pour calculer une modification d'une valeur de la fonction d'énergie due à une modification d'une valeur d'une variable d'état parmi la pluralité de premières variables d'état, dans lequel :
   les moyens de traitement (12) sont en mesure d'accéder à des quatrièmes moyens de stockage, les quatrièmes moyens de stockage stockant des valeurs de la pluralité de variables d'état et une pluralité de deuxièmes champs locaux correspondant à la pluralité de variables d'état ;
   **caractérisé en ce que**
   la modification de l'ensemble cible d'essai inclut

   une lecture, à partir du dispositif de stockage (20), d'une pluralité de deuxièmes coefficients de couplage correspondant à une pluralité de deuxièmes paires incluant chacune une première variable d'état différentielle qui est incluse dans un ensemble cible d'essai précédent mais n'est pas incluse dans un ensemble cible d'essai courant parmi la pluralité de variables d'état et une variable d'état parmi une pluralité d'autres variables d'état, en même temps que la pluralité de premiers coefficients de couplage, et un stockage de la pluralité de deuxièmes coefficients de couplage, ainsi que de la pluralité de premiers coefficients de couplage dans les premiers moyens de stockage (11),

une mise à jour d'une deuxième valeur de la première variable d'état différentielle stockée dans les quatrièmes moyens de stockage avec une première valeur de la première variable d'état différentielle stockée dans les troisièmes moyens de stockage, et une mise à jour de la pluralité de deuxièmes champs locaux stockés dans les quatrièmes moyens de stockage, sur la base d'une différence dans la deuxième valeur entre avant et après la mise à jour de la deuxième valeur et de la pluralité de deuxièmes coefficients de couplage, et

une obtention, à partir des quatrièmes moyens de stockage, d'une troisième valeur d'une deuxième variable d'état différentielle qui n'est pas incluse dans l'ensemble cible d'essai précédent mais est incluse dans l'ensemble cible d'essai courant parmi la pluralité de variables d'état, un stockage de la troisième valeur dans les troisièmes moyens de stockage, un calcul d'un champ local correspondant à la deuxième variable d'état différentielle, sur la base de différences entre des quatrième et cinquième valeurs de chacune de la pluralité de premières variables d'état stockées respectivement dans les troisièmes moyens de stockage et les quatrièmes moyens de stockage, le deuxième champ local de la deuxième variable d'état différentielle étant stocké dans les quatrièmes moyens de stockage, et la pluralité de premiers coefficients de couplage étant stockés dans les premiers moyens de stockage (11), et un stockage du champ local calculé dans les troisièmes moyens de stockage ; et

l'essai inclut

un calcul d'une modification de la valeur de la fonction d'énergie due à une modification d'une valeur d'une première variable d'état appartenant à l'ensemble cible d'essai courant, sur la base d'un premier champ local correspondant à la première variable d'état parmi la pluralité de premiers champs locaux stockés dans les troisièmes moyens de stockage, une mise à jour de la valeur de la première variable d'état stockée dans les

troisièmes moyens de stockage en fonction de la modification calculée, et

une mise à jour, lors de la mise à jour de la valeur de la première variable d'état, de la pluralité de premiers champs locaux stockés dans les troisièmes moyens de stockage, sur la base des premiers coefficients de couplage associés à la première variable d'état mise à jour.

2. Appareil de traitement d'informations (10) selon la revendication 1, dans lequel les moyens de traitement (12) sont en outre configurés pour mettre en œuvre la mise à jour de la pluralité de deuxièmes champs locaux stockés dans les quatrièmes moyens de stockage et l'essai sur l'ensemble cible d'essai courant en parallèle.

3. Appareil de traitement d'informations (10) selon la revendication 1 ou la revendication 2, dans lequel, lors de la lecture de la pluralité de deuxièmes coefficients de couplage à partir du dispositif de stockage (20), les moyens de traitement (12) sont en outre configurés pour omettre de lire des coefficients de couplage correspondant à des paires incluant chacune la première variable d'état différentielle et l'une des autres variables d'état appartenant à l'ensemble cible d'essai précédent.

4. Appareil de traitement d'informations (10) selon l'une quelconque des revendications 1 à 3, dans lequel les moyens de traitement (12) sont en outre configurés pour lire des coefficients de couplage associés à une variable d'état différentielle entre un ensemble cible d'essai précédent et un ensemble cible d'essai courant à partir du dispositif de stockage (20), et omettre de lire des coefficients de couplage associés à une variable d'état se chevauchant entre l'ensemble cible d'essai précédent et l'ensemble cible d'essai courant à partir du dispositif de stockage (20), dans lequel la variable d'état différentielle est une variable qui est incluse dans un ensemble cible d'essai précédent mais n'est pas incluse dans un ensemble cible d'essai courant.

5. Appareil de traitement d'informations (10) selon l'une quelconque des revendications 1 à 4, dans lequel les moyens de traitement (12) sont en outre configurés pour pré-lire, à partir du dispositif de stockage (20), des coefficients de couplage associés à une variable d'état appartenant à un ensemble cible d'essai suivant tout en réalisant l'essai sur un ensemble cible d'essai courant.

6. Appareil de traitement d'informations (10) selon l'une quelconque des revendications 1 à 5, dans lequel des indices de la pluralité de premières variables d'état appartenant à l'ensemble cible d'essai sont consécutifs ou non consécutifs.

7. Appareil de traitement d'informations (10) selon l'une quelconque des revendications 1 à 6, dans lequel il existe une pluralité de variables d'état différentielles entre un ensemble cible d'essai précédent et un ensemble cible d'essai courant, dans lequel la pluralité de variables d'état différentielles est une pluralité de variables qui sont incluses dans un ensemble cible d'essai précédent mais ne sont pas incluses dans un ensemble cible d'essai courant.

8. Appareil de traitement d'informations (10) selon l'une quelconque des revendications 1 à 7, dans lequel les moyens de traitement (12) sont en outre configurés pour réaliser

l'essai d'une première manière ou d'une deuxième manière,
dans lequel
la première manière inclut le fait de sélectionner la pluralité de premières variables d'état une par une, au hasard ou dans un ordre prédéterminé, de déterminer sur la base de la fonction d'énergie s'il y a lieu de mettre à jour une valeur de la première variable d'état sélectionnée, et, lorsqu'il est déterminé qu'il y a lieu de mettre à jour la valeur de la première variable d'état sélectionnée, de mettre à jour la valeur de la première variable d'état sélectionnée, et
la deuxième manière inclut le fait de déterminer, en parallèle, s'il y a lieu d'accepter la mise à jour de valeur sur l'ensemble de la pluralité de premières variables d'état ou un nombre prédéterminé de premières variables d'état sélectionnées parmi la pluralité de premières variables d'état, et de mettre à jour une valeur d'une variable d'état parmi les premières variables d'état pour laquelle la mise à jour de valeur est acceptée.

9. Procédé de traitement d'informations mis en œuvre par un appareil de traitement d'informations (10) pour trouver une solution à un problème d'optimisation combinatoire en utilisant une fonction d'énergie d'un modèle d'Ising, le procédé de traitement d'informations comprenant :

mettre en oeuvre un procédé consistant à

lire, par rapport à un ensemble cible d'essai incluant une pluralité de premières variables d'état parmi une pluralité de variables d'état incluses dans la fonction d'énergie en tant que cibles pour un essai visant à déterminer s'il y a lieu d'effectuer une mise à jour de valeur, une pluralité de premiers coefficients de couplage correspondant à une pluralité de premières paires de la pluralité de premières variables d'état appartenant à l'ensemble cible d'essai à partir d'un dispositif de stockage (20), et stocker la pluralité de premiers coefficients de couplage dans des premiers moyens de stockage (11), le dispositif de stockage (20) stockant une pluralité de coefficients de couplage correspondant à une pluralité de paires de la pluralité de variables d'état, les premiers moyens de stockage (11) étant configurés pour stocker une partie de la pluralité de coefficients de couplage, et
réaliser, une pluralité de fois, l'essai visant à déterminer s'il y a lieu de mettre à jour une valeur d'une variable d'état quelconque parmi la pluralité de premières variables d'état appartenant à l'ensemble cible d'essai, en utilisant la pluralité de premiers coefficients de couplage stockés dans les premiers moyens de stockage (11) ; et

répéter une modification de l'ensemble cible d'essai et le procédé, de manière à cibler l'ensemble de la pluralité de variables d'état dans l'essai,
le procédé de traitement d'informations comprenant en outre :

stocker des valeurs de la pluralité de premières variables d'état et une pluralité de premiers champs locaux correspondant à la pluralité de premières variables d'état dans des troisièmes moyens de stockage, la pluralité de premiers champs locaux étant utilisée pour calculer une modification d'une valeur de la fonction d'énergie due à une modification d'une valeur d'une variable d'état parmi la pluralité de premières variables d'état, et
accéder à des quatrièmes moyens de stockage, les quatrièmes moyens de stockage stockant des valeurs de la pluralité de variables d'état et une pluralité de deuxièmes champs locaux correspondant à la pluralité de variables d'état ;
**caractérisé par**
la modification de l'ensemble cible d'essai incluant

une lecture, à partir du dispositif de stockage (20), d'une pluralité de deuxièmes coefficients de couplage correspondant à une pluralité de deuxièmes paires incluant chacune une première variable d'état différentielle qui est incluse dans un ensemble cible d'essai précédent mais n'est pas incluse dans un ensemble cible d'essai courant parmi la pluralité de variables d'état et une variable d'état parmi une pluralité d'autres variables d'état, en même temps que la pluralité de premiers coefficients de couplage, et un stockage de la pluralité de deuxièmes coefficients de couplage, ainsi que de la pluralité de premiers coefficients de couplage dans les premiers moyens de stockage (11),

une mise à jour d'une deuxième valeur de la première variable d'état différentielle stockée dans les quatrièmes moyens de stockage avec une première valeur de la première variable d'état différentielle stockée dans les troisièmes moyens de stockage, et une mise à jour de la pluralité de deuxièmes champs locaux stockés dans les quatrièmes moyens de stockage, sur la base d'une différence dans la deuxième valeur entre avant et après la mise à jour de la deuxième valeur et de la pluralité de deuxièmes coefficients de couplage, et

une obtention, à partir des quatrièmes moyens de stockage, d'une troisième valeur d'une deuxième variable d'état différentielle qui n'est pas incluse dans l'ensemble cible d'essai précédent mais est incluse dans l'ensemble cible d'essai courant parmi la pluralité de variables d'état, un stockage de la troisième valeur dans les troisièmes moyens de stockage, un calcul d'un champ local correspondant à la deuxième variable d'état différentielle, sur la base de différences entre des quatrième et cinquième valeurs de chacune de la pluralité de premières variables d'état stockées respectivement dans les troisièmes moyens de stockage et les quatrièmes moyens de stockage, le deuxième champ local de la deuxième variable d'état différentielle étant stocké dans les quatrièmes moyens de stockage, et la pluralité de premiers coefficients de couplage étant stockés dans les premiers moyens de stockage (11), et un stockage du champ local calculé dans les troisièmes moyens de stockage ;

et l'essai inclut

un calcul d'une modification de la valeur de la fonction d'énergie due à une modification d'une valeur d'une première variable d'état appartenant à l'ensemble cible d'essai courant, sur la base d'un premier champ local correspondant à la première variable d'état parmi la pluralité de premiers champs locaux stockés dans les troisièmes moyens de stockage,

une mise à jour de la valeur de la première variable d'état stockée dans les troisièmes moyens de stockage en fonction de la modification calculée, et

une mise à jour, lors de la mise à jour de la valeur de la première variable d'état, de la pluralité de premiers champs locaux stockés dans les troisièmes moyens de stockage, sur la base des premiers coefficients de couplage associés à la première variable d'état mise à jour.

10. Programme informatique qui amène un ordinateur à mettre en œuvre une procédure pour trouver une solution à un problème d'optimisation combinatoire en utilisant une fonction d'énergie d'un modèle d'Ising, la procédure comprenant :

mettre en oeuvre un procédé consistant à

lire, par rapport à un ensemble cible d'essai incluant une pluralité de premières variables d'état parmi une pluralité de variables d'état incluses dans la fonction d'énergie en tant que cibles pour un essai visant à déterminer s'il y a lieu d'effectuer une mise à jour de valeur, une pluralité de premiers coefficients de couplage correspondant à une pluralité de premières paires de la pluralité de premières variables d'état appartenant à l'ensemble cible d'essai à partir d'un dispositif de stockage (20), et stocker la pluralité de premiers coefficients de couplage dans des premiers moyens de stockage (11), le dispositif de stockage (20) stockant une pluralité de coefficients de couplage correspondant à une pluralité de paires de la pluralité de variables d'état, les premiers moyens de stockage (11) étant configurés pour stocker une partie de la pluralité de coefficients de couplage, et

réaliser, une pluralité de fois, l'essai visant à déterminer s'il y a lieu de mettre à jour une valeur d'une variable d'état quelconque parmi la pluralité de premières variables d'état appartenant à l'ensemble cible d'essai, en utilisant la pluralité de premiers coefficients de couplage stockés dans les premiers moyens de stockage (11) ; et

répéter une modification de l'ensemble cible d'essai et le procédé, de manière à cibler l'ensemble de la pluralité de variables d'état dans l'essai,

la procédure comprenant en outre :

stocker des valeurs de la pluralité de premières variables d'état et une pluralité de premiers champs locaux correspondant à la pluralité de premières variables d'état dans des troisièmes moyens de stockage, la pluralité de premiers champs locaux étant utilisée pour calculer une modification d'une valeur de la fonction d'énergie due à une modification d'une valeur d'une variable d'état parmi la pluralité de premières variables d'état, et

accéder à des quatrièmes moyens de stockage, les quatrièmes moyens de stockage stockant des valeurs de la pluralité de variables d'état et une pluralité de deuxièmes champs locaux correspondant à la pluralité de variables d'état ;

**caractérisé par**

la modification de l'ensemble cible d'essai incluant

une lecture, à partir du dispositif de stockage (20), d'une pluralité de deuxièmes coefficients de couplage correspondant à une pluralité de deuxièmes paires incluant chacune une première variable d'état différentielle qui est incluse dans un ensemble cible d'essai précédent mais n'est pas incluse dans un ensemble cible d'essai courant parmi la pluralité de variables d'état et une variable d'état parmi une pluralité d'autres variables d'état, en même temps que la pluralité de premiers coefficients de couplage, et un stockage de la pluralité de deuxièmes coefficients de couplage, ainsi que de la pluralité de premiers coefficients de couplage dans les premiers moyens de stockage (11),

une mise à jour d'une deuxième valeur de la première variable d'état différentielle stockée dans les quatrièmes moyens de stockage avec une première valeur de la première variable d'état différentielle stockée dans les troisièmes moyens de stockage, et une mise à jour de la pluralité de deuxièmes champs locaux stockés dans les quatrièmes moyens de stockage, sur la base d'une différence dans la deuxième valeur entre avant et après la mise à jour de la deuxième valeur et de la pluralité de deuxièmes coefficients de couplage, et

une obtention, à partir des quatrièmes moyens de stockage, d'une troisième valeur d'une deuxième variable d'état différentielle qui n'est pas incluse dans l'ensemble cible d'essai précédent mais est incluse dans l'ensemble cible d'essai courant parmi la pluralité de variables d'état, un stockage de la troisième valeur dans les troisièmes moyens de stockage, un calcul d'un champ local correspondant à la deuxième variable d'état différentielle, sur la base de différences entre des quatrième et cinquième valeurs de chacune de la pluralité de premières variables d'état stockées respectivement dans les troisièmes moyens de stockage et les quatrièmes moyens de stockage, le deuxième champ local de la deuxième variable d'état différentielle étant stocké dans les quatrièmes moyens de stockage, et la pluralité de premiers coefficients de couplage étant stockés dans les premiers moyens de stockage (11), et un stockage du champ local calculé dans les troisièmes moyens de stockage ; et

l'essai inclut

un calcul d'une modification de la valeur de la fonction d'énergie due à une modification d'une valeur d'une première variable d'état appartenant à l'ensemble cible d'essai courant, sur la base d'un premier champ local correspondant à la première variable d'état parmi la pluralité de premiers champs locaux stockés dans les troisièmes moyens de stockage,

une mise à jour de la valeur de la première variable d'état stockée dans les troisièmes moyens de stockage en fonction de la modification calculée, et

une mise à jour, lors de la mise à jour de la valeur de la première variable d'état, de la pluralité de premiers champs locaux stockés dans les troisièmes moyens de stockage, sur la base des premiers coefficients de couplage associés à la première variable d'état mise à jour.

FIG. 1

FIG. 2

FIG. 3

FIG. 4

30

ROW INDEX

31

$k$

$k + m - 1$

$k$          $k + m - 1$ ← COLUMN INDEX

m ROWS

FIG. 5

FIG. 6

START

INITIALIZATION  S10

UPDATE LOCAL
VARIABLES (r TIMES)  S11

PRE-READ COUPLING
COEFFICIENTS  S12

UPDATE COEFFICIENT ROWS  S13

THE NUMBER OF ROUNDS FOR
LOCAL VARIABLES $\geq$ k  S14

NO

YES

$\beta \leftarrow s\beta$  S15

$\beta > \beta_{stop}$  S16

NO

YES

OUTPUT STATE WITH MINIMUM ENERGY  S17

END

FIG. 7

221

LOCAL MEMORY UNIT

222

300

310

LOCAL FIELD HOLDING UNIT

· · ·

320

ΔE CALCULATION UNIT

· · ·

330

SELECTION UNIT

340

STATE VARIABLE HOLDING UNIT

PARALLEL TRIAL EXECUTION UNIT

# FIG. 8

# FIG. 9

$$k = argmin\big[max(0, \Delta E_i) + T\, log\, \big(-log(r_i)\big)\big]$$

FIG. 10

FIG. 11

LOCAL
VARIABLES

$x^*_{i \in R(t)}$

$h^*_{i \in R(t)}$

Y1

FIG. 12

Y2

GLOBAL
VARIABLES

$x_1$ $x_2$ $\cdots$ $x_N$

$h_1$ $h_2$ $\cdots$ $h_N$

FIG. 13

DRAM 210

COMPUTING DEVICE 220

COEFFICIENT DATA STREAM GENERATION UNIT 225

CONTROL UNIT 223

$$\begin{array}{ccc} W_{i(t+m),j_1(t+m)} & \cdots & W_{i(t+m),j_m(t+m)} \\ \cdots & \cdots & \cdots \\ W_{i(t+1),j_1(t+1)} & \cdots & W_{i(t+1),j_m(t+1)} \end{array}$$ 221

$$\begin{array}{ccc} W_{i(t),1} & \cdots & W_{i(t),N} \end{array}$$ 226

$$\begin{array}{cccc} x_{i(t+1)} & x_{i(t+2)} & \cdots & x_{i(t+m)} \\ h_{i(t+1)} & h_{i(t+2)} & \cdots & h_{i(t+m)} \end{array}$$ 222a

$$\begin{array}{cccc} x_1 & x_2 & \cdots & x_N \\ h_1 & h_2 & \cdots & h_N \end{array}$$ 222b

ENERGY CALCULATION UNIT 224

DRAM
210

COEFFICIENT DATA STREAM GENERATION UNIT
225

COEFFICIENT DATA STREAM
D10

$W_{i \in R(t+m), j \in R(t+m)}$
D11

$W_{i \in R(t), j \in R(t)}$
D12

FIG. 14

COEFFICIENT DATA STREAM
GENERATION UNIT                    225

↓

COEFFICIENT DATA STREAM            D10

m COUPLING COEFFICIENTS          N - m COUPLING COEFFICIENTS

| $W_{k+m,k+1}$ $\cdots$ $W_{k+m,k+m}$ | $W_{k,1}$ $\cdots$ $W_{k,k-1}$ | $W_{k,k+m}$ $\cdots$ $W_{k,N}$ |
|---|---|---|
| $W_{k+m+1,k+2}$ $\cdots$ $W_{k+m+1,k+m+1}$ | $W_{k+1,1}$ $\cdots$ $W_{k+1,k}$ | $W_{k+1,k+m+1}$ $\cdots$ $W_{k+1,N}$ |

TIME STEP

FIG. 15

COEFFICIENT DATA STREAM
GENERATION UNIT
225

↓

COEFFICIENT DATA STREAM
D10a

m COUPLING COEFFICIENTS

N COUPLING COEFFICIENTS

| $W_{k+m,k+1}$ | ⋯ | $W_{k+m,k+m}$ |
|---|---|---|

| $W_{k+m+1,k+2}$ | ⋯ | $W_{k+m+1,k+m+1}$ |
|---|---|---|

| $W_{k,1}$ | ⋯ | $W_{k,N}$ |
|---|---|---|

| $W_{k+1,1}$ | ⋯ | $W_{k+1,N}$ |
|---|---|---|

TIME STEP

FIG. 16

FIG. 17

FIG. 18

FIG. 19

FIG. 20

FIG. 21

FIG. 22

FIG. 23

DRAM    210

$$\Delta x_i$$
$$h_1 \quad h_2 \quad \cdots \quad h_N$$

COMPUTING DEVICE    220

READING UNIT    225a

CONTROL UNIT    223

221

$$W_{i(t+m),j_1(t+m)} \quad \cdots \quad W_{i(t+m),j_m(t+m)}$$
$$\cdots \qquad \cdots \qquad \cdots$$
$$W_{i(t+1),j_1(t+1)} \quad \cdots \quad W_{i(t+1),j_m(t+1)}$$

226

$$W_{i(t),1} \qquad \cdots \qquad W_{i(t),N}$$

222a

$$x_{i(t+1)} \quad x_{i(t+2)} \quad \cdots \quad x_{i(t+m)}$$
$$h_{i(t+1)} \quad h_{i(t+2)} \quad \cdots \quad h_{i(t+m)}$$

GLOBAL VARIABLE UPDATE UNIT    222c

ENERGY CALCULATION UNIT    224

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016051350 A
- JP 2019139323 A
- JP 2020204929 A
- JP 2020038435 A